# EUROPEAN PATENT APPLICATION

(11) **EP 4 715 548 A1**
(43) Date of publication of application: **25.03.2026**
(21) Application number: 24807115.1
(22) Date of filing: 09.05.2024
(51) Int. Cl.: G06F 3/0484, A63F 13/24, G06F 3/023

(54) **INFORMATION PROCESSING DEVICE, INFORMATION PROCESSING METHOD, AND COMPUTER PROGRAM**

(30) Priority: 15.05.2023 US 202363466367 P
(71) Applicant: Sony Interactive Entertainment Inc., Tokyo 108-0075 (JP); Sony Interactive Entertainment LLC, San Mateo, CA 94404 (US)
(72) Inventor: DANIEL, Alvin Julian, San Mateo, CA 94404 (US); MIZUTA, Yuka, Tokyo 108-0075 (JP); NISHIDA, Makoto, Tokyo 108-0075 (JP); YONETOMI, Shoi, Tokyo 108-0075 (JP); KONDO, Yurika, Tokyo 108-0075 (JP)
(74) Representative: Fish & Richardson P.C.
(86) International application number: PCT/JP2024/017237
(87) International publication number: WO 2024/237163

(57) **Abstract**

An information processing system 10 includes an information processing device 12, a display device 14, and a controller 18. The controller 18 includes a plurality of buttons. The information processing device 12 causes the display device 14 to display an edit screen in which a special mode can be set for any one of the buttons of the controller 18 in an edit mode. The special mode is a mode for continuing an input state of the corresponding button. The information processing device 12 displays information associated with continuation of the input state of the button for which the special mode has been set, in a screen after the edit mode ends.

## Description

### [Technical Field]

The present invention relates to a data processing technology, and particularly to an information processing device, an information processing method, and a computer program.

### [Background Art]

Users use games or other applications in various conditions and environments. For example, some of these users have physical disabilities. In addition, some users demand optimization of operation for each type of various applications. Controllers highly adaptive to users (also called "adaptive controllers") have been provided to assist users in various conditions and environments to use applications. Some types of the adaptive controllers are operable in a flat state on a desk or a floor without being lifted up. In addition, some other types of the adaptive controllers allow users to freely customize assignments of functions to buttons.

### [Summary]

### [Technical Problem]

Improvement of usability of adaptive controllers has been demanded. A main object of the present invention is to provide a technology for improving adaptivity or usability of a controller for various users.

### [Solution to Problem]

In order to solve the above problem, an information processing device according to an aspect of the present invention is connected with an operation device that includes a plurality of buttons, and includes a screen display section that displays an edit screen in which a special mode is able to be set for any one of the buttons of the operation device in an edit mode, the special mode being a mode for continuing an input state of the corresponding button. The screen display section displays information associated with continuation of the input state of the button for which the special mode has been set, in a screen after the edit mode ends.

Another aspect of the present invention is directed to an information processing device. This device is an information processing device connected with an operation device that includes a plurality of buttons. The information processing device includes a processor. The processor displays an edit screen in which a special mode is able to be set for any one of the buttons of the operation device in an edit mode, the special mode being a mode for continuing an input state of the corresponding button. The processor displays information associated with continuation of the input state of the button for which the special mode has been set, in a screen after the edit mode ends.

A further aspect of the present invention is directed to an information processing method. This method is performed by an information processing device connected with an operation device that includes a plurality of buttons. The information processing method includes a step of displaying an edit screen in which a special mode is able to be set for any one of the buttons of the operation device in an edit mode, the special mode being a mode for continuing an input state of the corresponding button, and a step of displaying information associated with continuation of the input state of the button for which the special mode has been set, in a screen after the edit mode ends.

Note that any combinations of the constituent elements described above and expressions of the present invention converted between a system, a computer program, a recording medium storing the computer program, and the like are also effective as aspects of the present invention.

### [Advantageous Effect of Invention]

According to the present invention, it is possible to improve adaptivity or usability of a controller for various users.

### [Brief Description of Drawings]

[FIG. 1] FIG. 1 is a diagram illustrating a configuration of an information processing system according to an embodiment.
[FIG. 2] FIG. 2 is a diagram illustrating a top surface of a controller.
[FIG. 3] FIG. 3 is a diagram illustrating a hardware configuration associated with the controller according to the embodiment.
[FIG. 4] FIG. 4 is a diagram illustrating a relation between the operation of an analog stick and output values.
[FIG. 5] FIG. 5 is a diagram illustrating a hardware configuration associated with an information processing device according to the embodiment.
[FIG. 6] FIG. 6 is a block diagram illustrating function blocks of the controller.
[FIG. 7] FIG. 7 is a block diagram illustrating function blocks of the information processing device.
[FIG. 8] FIG. 8 is a flowchart illustrating the operation of the information processing device.
[FIG. 9] FIG. 9 is a diagram illustrating an example of an orientation screen.
[FIG. 10] FIG. 10 is a diagram illustrating an example of a button assignment customization screen.
[FIG. 11] FIG. 11 is a diagram illustrating an example of an alert window.
[FIG. 12] FIG. 12 is a diagram illustrating an example of a sensitivity adjustment screen.
[FIG. 13] FIG. 13 is a diagram illustrating an example of the sensitivity adjustment screen.
[FIG. 14] FIG. 14 is a diagram illustrating an example of the sensitivity adjustment screen.
[FIG. 15] FIG. 15 is a diagram illustrating an example of the sensitivity adjustment screen.
[FIG. 16] FIG. 16 is a diagram illustrating an example of the sensitivity adjustment screen.
[FIG. 17] FIG. 17 is a diagram illustrating behavior of a button for which a toggle mode is enabled.
[FIG. 18] FIG. 18 is a diagram illustrating an example of an application screen.
[FIG. 19] FIG. 19 is a diagram illustrating an example of an orientation screen in a modified example.

### [Description of Embodiment]

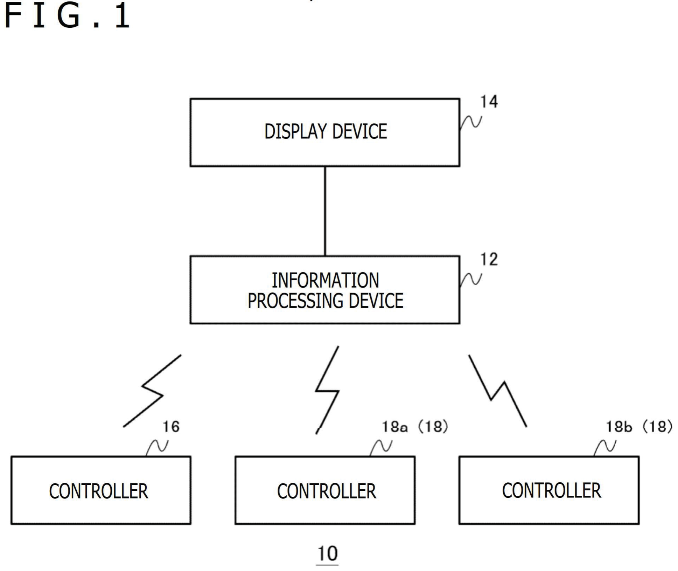

FIG. 1 illustrates a configuration of an information processing system 10 according to an embodiment. The information processing system 10 includes an information processing device 12, a display device 14, a controller 16, a controller 18a, and a controller 18b. In a case of collectively referring to the controller 18a and the controller 18b, they are called the controllers 18.

The information processing device 12 is a computer which can execute applications such as games, and is a stationary game machine in the embodiment. In a modified example, the information processing device 12 may be a tablet terminal, a smartphone, or a server.

Each of the controller 16 and the controllers 18 is an operation device which receives an operation input from a user to system software or application software (e.g., moving image game) executed by the information processing device 12. Each of the controller 16 and the controllers 18 sequentially transmits, to the information processing device 12, operation information indicating the operation input from the user. The controller 16 and the controllers 18 are connected to the information processing device 12 in a wired or wireless manner.

The controller 16 is an ordinary game controller intended to be operated by a user while being held in a specific posture. Meanwhile, each of the controllers 18 is an adaptive controller intended to be used by any of users in various conditions, such as a person with a disability. In the example in FIG. 1, a user inputs an operation by using the three controllers (controller 16, controller 18a, and controller 18b) in parallel.

The display device 14 has a display which outputs images, and a speaker which outputs sound. The display device 14 may be a television set or a computer display. The display device 14 is connected to the information processing device 12 in a wired or wireless manner. When receiving the operation information provided by each of the controller 16 and the controllers 18, the information processing device 12 reflects this operation information in processing of the system software or the application software, causes the display device 14 to display images associated with the processing result, and causes the speaker of the display device 14 to output sound associated with the processing result.

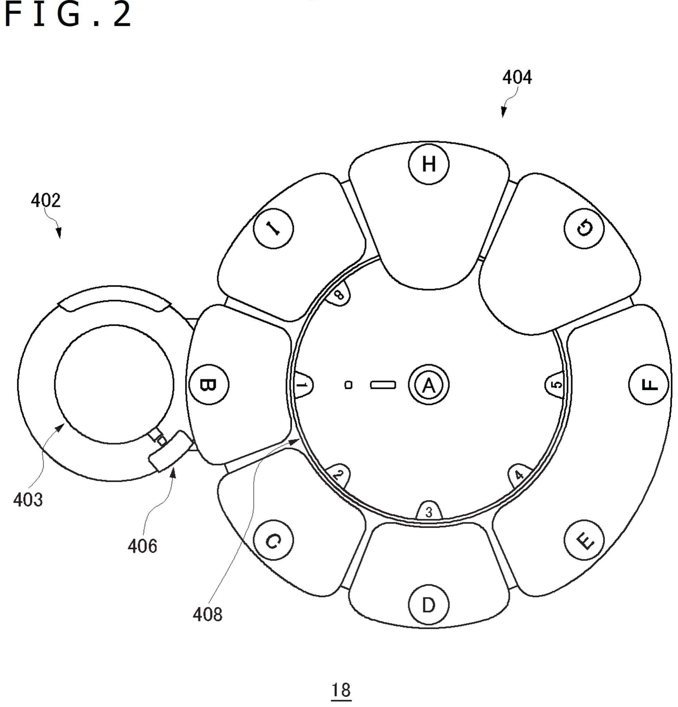

FIG. 2 is a diagram illustrating a top surface of the controller 18. The controller 18 includes an analog stick unit 402 corresponding to a first operation member and a button unit 404 corresponding to a second operation member. The button unit 404 is also considered as a main body of the controller 18. Each of the analog stick unit 402 and the button unit 404 has a circular outer edge. The analog stick unit 402 is disposed to project from the outer edge of the button unit 404, i.e., connected with the button unit 404 to project from the outer edge of the button unit 404. In a case where the controller 18 is viewed in plan view, the analog stick unit 402 is disposed in such a position as not to overlap with the button unit 404. Note that the button unit 404 may have a shape other than the circular shape as long as symmetricity is maintained in the up-down direction and/or the left-right direction. For example, the button unit 404 may have a rectangular shape or an elliptical shape.

Note that a connection portion between the analog stick unit 402 and the button unit 404 includes an expandable and contractible member. In a case where the expandable and contractible member is in a most contracted state, the analog stick unit 402 and the button unit 404 come close to each other in such a manner that the outer edge of the analog stick unit 402 and the outer edge of the button unit 404 are brought into contact. In contrast, the analog stick unit 402 and the button unit 404 move away from each other as the expandable and contractible member expands more. The user determines settings of the expandable and contractible member such that a desired distance can be left between the analog stick unit 402 and the button unit 404.

An analog stick 403 is provided at a center of the analog stick unit 402 to function as an analog input device. The analog stick 403 is also called a control stick, a thumb stick, or a joy stick, and is used to input a tilt direction and a tilt amount. The tilt amount is also considered as a tilt angle of the analog stick 403. The analog stick 403 also functions as a press-down button which is depressed when being pressed by the user and which returns to its original position when the user takes his or her hand off the button.

The analog stick unit 402 includes a profile button 406. The profile button 406 is an operation member for switching setting information (profile described later) applied to the controller 18.

The button unit 404 includes nine buttons in total, i.e., a center button disposed at the center and buttons 1 to 8 disposed around the center button. Any functions can be assigned to the nine buttons. In the example in FIG. 2, a function A (e.g., decision function) is assigned to the center button, a function B (e.g., cancel function) is assigned to the button 2, and a function C (e.g., option function) is assigned to the button 3. The functions that can be assigned to the buttons 1 to 8 include functions of direction keys for direction input (e.g., direction keys for inputting four directions: up, down, left, and right). Among the buttons 1 to 8, the button to which the function A is assigned, the button to which the function B is assigned, and the button to which the function C is assigned will hereinafter also be referred to as an A button, a B button, and a C button, respectively. The same applies to the remaining buttons. The analog stick 403, the center button, and the buttons 1 to 8 are used to operate the system software or the application software executed by the information processing device 12.

The button unit 404 further includes a light emitting unit 408 having a circular shape and surrounding the center button. The light emitting unit 408 may include an LED (Light Emitting Diode).

The controller 18 according to the embodiment stores, in a non-volatile memory, setting information that is associated with an operation performed on the controller 18 and that is customized by the user (hereinafter also referred to as "profile information" or simply as a "profile") (the same applies to the controller 16 hereinafter). The profile information includes setting information associated with the behavior of the controller 18. The controller 18 can store a plurality of pieces of the profile information and switch the profile information to be applied, according to a user operation.

The profile information may also include setting values and the like determined beforehand and associated with an operation performed on the controller 18. In addition, the profile information may include setting information associated with generation of operation information that is input to the information processing device 12 according to an operation input to the controller 18. Moreover, the profile information may include information referred to during conversion into digital values from analog values detected in response to an operation input to the controller 18.

The profile information according to the embodiment includes an ID (Identification) and a name of a profile, posture information of the controller 18, button assignment information, and sensitivity-related information of the analog stick 403. The posture information of the controller 18 is information indicating a positional relation between the analog stick unit 402 and the button unit 404. The button assignment information is information indicating various operations, commands, and functions assigned to the respective buttons of the controller 18 by the user. In other words, the button assignment information is information indicating an assignment status of various operations, commands, and functions to the respective buttons.

The sensitivity-related information of the analog stick 403 includes information indicating a setting value associated with sensitivity of the analog stick 403. The sensitivity of the analog stick 403 specifies a level of an operation recognized by the information processing device 12, with respect to a level of an operation actually input to the analog stick 403 from the user (e.g., tilt amount or rotation amount). The level of the operation recognized by the information processing device 12 is also considered as a level of an operation input to an application currently executed by the information processing device 12. The setting value of sensitivity may be a ratio of an operation amount actually input to the analog stick 403 to an operation amount recognized by the information processing device 12.

In addition, the sensitivity-related information of the analog stick 403 includes dead zone information of the analog stick 403, such as a setting value associated with a dead zone. The dead zone is also referred to as a dead band and corresponds to a range where an operation input to the analog stick 403 is not accepted. In other words, the dead zone is a range where an operation input to the analog stick 403 is ignored. The setting value of the dead zone may be a value range of tilt amounts and rotation amounts corresponding to the dead zone. As described above, the profile information according to the embodiment includes setting information of the analog stick 403 of the controller 18.

An outline of the information processing system 10 according to the embodiment will be described. The information processing system 10 has the following five characteristics.

### (Characteristic 1) Decision of controller posture:

The controller 18 can be used in any posture. The posture of the controller 18 is also considered as the positional relation between the analog stick unit 402 and the button unit 404. According to the embodiment, the posture of the controller 18 to be used is selected by the user from among a plurality of patterns of the posture of the controller 18. In this manner, the user can notify the information processing device 12 of the selected posture of the controller 18 and can thus use the controller 18 in a posture suitable for the user. Information associated with the posture of the controller 18 selected by the user is retained in the controller 18 as profile information.

### (Characteristic 2) Button mapping for operation in edit mode:

It is necessary to allow the user to assign functions as desired to any buttons on the controller 18. For example, it is necessary to enable functions including a decision function and a cancel function that are used to edit a profile (e.g., used to assign functions to buttons) to be assigned. Moreover, the posture of the controller 18 included in a profile to be edited may be different from the posture of the controller 18 included in a currently enabled profile. In this case, it is not easy to edit the profile. Therefore, according to the embodiment, fixed button mapping is provided as button mapping for operation in an edit mode. This allows the user to assign functions as desired to any buttons and makes it easy to perform the operation for assigning functions.

### (Characteristic 3) Alert for no assignment of essential function:

In a case where the user assigns functions as desired to any buttons on the controller 18, any of the functions essential for the operation of the system may possibly be left unassigned. According to the embodiment, a predetermined alert is given to the user in a case where an essential function is not assigned to any button. In addition, by enabling the storage of a profile including an unassigned essential function in a case where the user desires to store this profile, the degree of freedom of function assignments to the buttons is increased.

### (Characteristic 4) Toggle mode notification:

A holding down operation for continuously pressing the button of the controller with a constant force is required in some cases during the operation of an application. It is difficult for some of the users to perform an operation for holding the button down. According to the embodiment, a toggle mode can be set for each of the buttons of the controller 18. The toggle mode is an operation mode for enabling the buttons of the controller 18 to operate as toggle buttons. In this operation mode, in response to one short depressing operation of a button, an input state of the button continues, or the continuation of this input state ends. Moreover, in a case where the input state of one button for which the toggle mode has been set continues, information of this button is displayed in a screen. In this manner, holding down of the button can be achieved only by one depressing of the button, and the continuation of the input state of the button can be visualized.

### (Characteristic 5) Expression of sensitivity adjustment status of analog stick by sound:

Conventionally, a high level and a low level of sensitivity have been presented in a visual manner by using a chart. However, handling of a wider variety of needs of users has been demanded. According to the embodiment, means for presentation of the high level and low level of sensitivity of the analog stick includes a change of a sound pitch. Auditory information added to feedback of a sensitivity adjustment status can present a change of sensitivity to the user in a more easily understandable manner. Moreover, inclusive feedback for various users can be achieved.

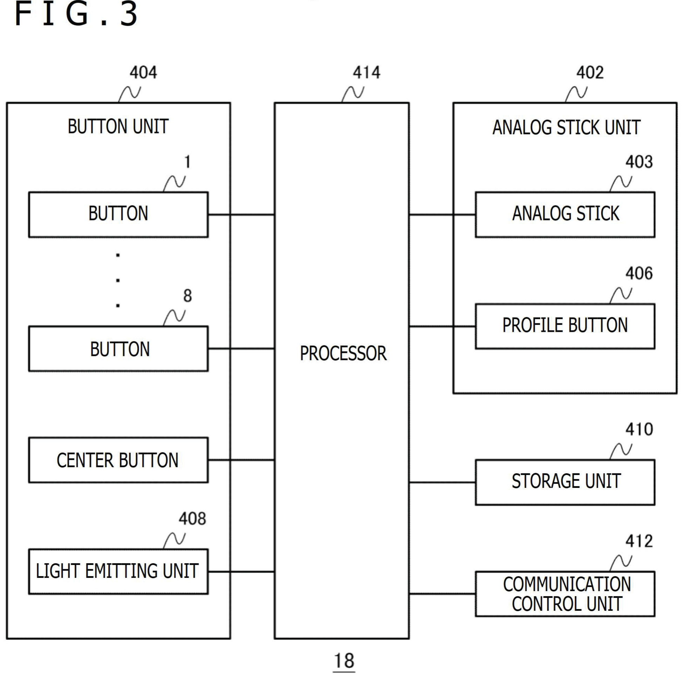

FIG. 3 illustrates a hardware configuration associated with the controller 18 according to the embodiment. The controller 18 includes a storage unit 410, a communication control unit 412, and a processor 414 in addition to the hardware illustrated in FIG. 2. The processor 414 executes various types of data processing and controls operations of various types of hardware. The processor 414 may include a CPU (Central Processing Unit), a memory, and an SoC (System on a chip). The storage unit 410 stores data referred to or updated by the processor 414. The communication control unit 412 controls communication with an external device. The communication control unit 412 according to the embodiment wirelessly communicates with the information processing device 12. In a modified example, the communication control unit 412 may communicate with the information processing device 12 by wire.

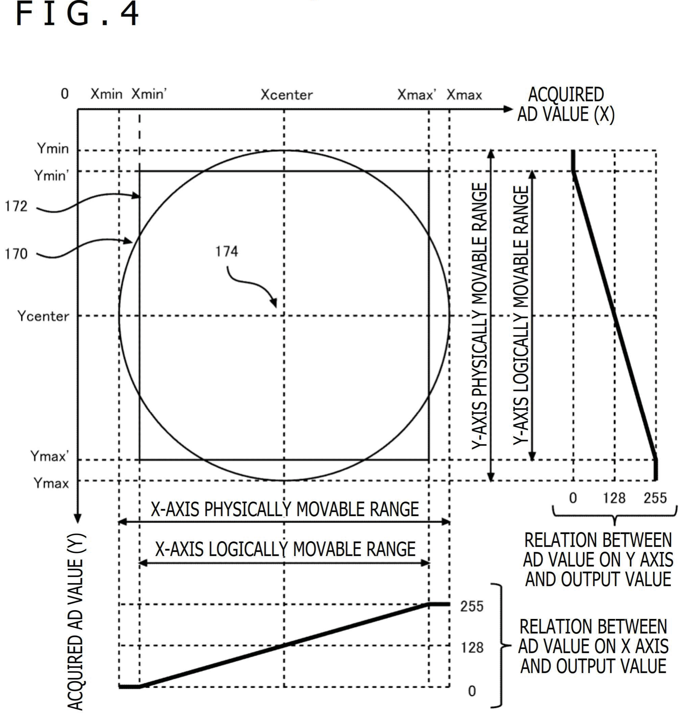

According to the embodiment, an operation input to the analog stick unit 402 (analog stick 403) from the user is detected as information in a two-dimensional plane. FIG. 4 illustrates a relation between the operation of the analog stick 403 and output values. A physically movable range 170 indicated by a solid circle represents a range where the analog stick 403 is actually movable. A return position 174 is also referred to as a center return position and corresponds to a position of the analog stick 403 when a finger is away from the analog stick 403 (i.e., when the analog stick 403 is not operated). Minimum AD (Administrative Distance) values (Xₘᵢₙ and Yₘᵢₙ) and maximum AD values (Xₘₐₓ and Yₘₐₓ) in the physically movable range 170 and also AD values (X_{center} and Y_{center}) at the return position 174 are measured during manufacture of the controller 18.

In addition, a predetermined rate (4% in the embodiment) of a distance from the return position 174 to the AD maximum values (Xₘₐₓ and Yₘₐₓ) based on the physically movable range 170 is used as an offset value, and positions (X'ₘₐₓ and Y'ₘₐₓ) shifted to the inside from the AD maximum values by the offset value are used as maximum values of output from the controller 18. Similarly, a predetermined rate (4% in the embodiment) of a distance from the return position 174 to the AD minimum values (Xₘᵢₙ and Yₘᵢₙ) based on the physically movable range 170 is used as an offset value, and positions (X'ₘᵢₙ and Y'ₘᵢₙ) shifted to the inside from the AD minimum values by the offset value are used as minimum values of output from the controller 18.

A range defined by (X'ₘₐₓ and Y'ₘₐₓ) and (X'ₘᵢₙ and Y'ₘᵢₙ) is used as a logically movable range 172. As described above, an operation input to the analog stick 403 from the user is detected as a value in the two-dimensional plane defined by an X axis and a Y axis. The controller 18 outputs operation information associated with the detected value to the information processing device 12. The output value from the controller 18 (output value indicated by operation information) includes an output value in an X-axis direction and an output value in a Y-axis direction, and each of the output values is normalized in a range of 0 to 255. The normalized output values vary within the logically movable range 172.

As illustrated in a graph presented in a lower part of FIG. 4, the output value in the X-axis direction is obtained according to the AD value on the X axis in the physically movable range 170 in the following manner.
(1) In a case of a value of X'ₘᵢₙ or lower, the output value is 0.
(2) In a case of a value of X'ₘᵢₙ to X_{center}, linear interpolation is applied such that the output value falls within a range of 0 to 128, and the output value is then obtained.
(3) In a case of a value of X_{center} to X'ₘₐₓ, linear interpolation is applied such that the output value falls within a range of 128 to 255, and the output value is then obtained.
(4) In a case of a value of X'ₘₐₓ or higher, the output value is 255.

Similarly, as illustrated in a graph presented in a right part of FIG. 4, the output value in the Y-axis direction is obtained according to the AD value on the Y axis in the physically movable range 170 in the following manner.
(1) In a case of a value of Y'ₘᵢₙ or lower, the output value is 0.
(2) In a case of a value of Y'ₘᵢₙ to Y_{center}, linear interpolation is applied such that the output value falls within a range of 0 to 128, and the output value is then obtained.
(3) In a case of a value of Y_{center} to Y'ₘₐₓ, linear interpolation is applied such that the output value falls within a range of 128 to 255, and the output value is then obtained.
(4) In a case of a value of Y'ₘₐₓ or higher, the output value is 255.

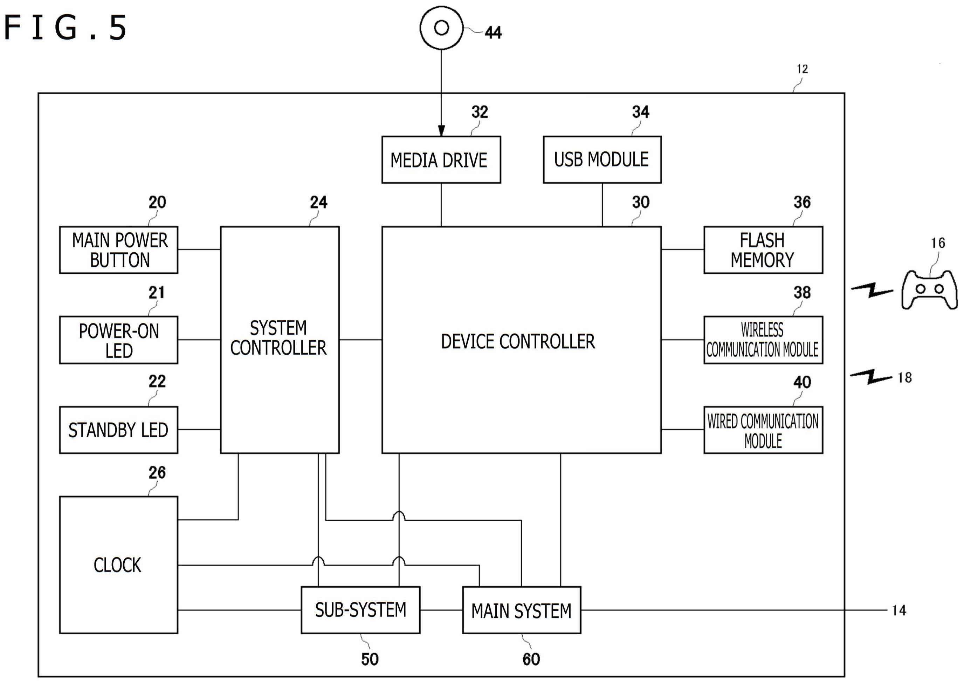

FIG. 5 illustrates a hardware configuration associated with the information processing device 12 according to the embodiment. The information processing device 12 includes a main power button 20, a power-on LED 21, a standby LED 22, a system controller 24, a clock 26, a device controller 30, a media drive 32, a USB (Universal Serial Bus) module 34, a flash memory 36, a wireless communication module 38, a wired communication module 40, a sub-system 50, and a main system 60. The sub-system 50 and the main system 60 can collectively be referred to as a processor.

The main system 60 includes a main CPU, a memory and a memory controller constituting a main storage device, a GPU (Graphics Processing Unit), and the like. The GPU is mainly used for arithmetic processing of game programs. These functions may be configured as an SoC and formed on one chip. The main CPU has a function of starting an OS (Operating System) and executing an application installed in a storage unit (e.g., flash memory 36 or unillustrated auxiliary storage device) in an environment provided by the OS. Also, the main system 60 has a function of controlling display details on the display device 14.

The sub-system 50 includes a sub-CPU, a memory and a memory controller constituting a main storage device, and the like, but does not include a GPU. The number of circuit gates of the sub-CPU is smaller than the number of circuit gates of the main CPU, and operational power consumption of the sub-CPU is lower than operational power consumption of the main CPU. The sub CPU operates while the main CPU is in a standby state. Accordingly, processing functions of the sub CPU are limited to reduce power consumption. Note that the sub-CPU and the memory may be formed on a different chip.

The main power button 20 functions as an input unit to which an operation is input from the user. The main power button 20 is provided on a front surface of a housing of the information processing device 12 and operated to turn on or off power supply to the main system 60 of the information processing device 12. In the following description, an on-state of a main power source refers to an active state of the main system 60, and an off-state of the main power source refers to a standby state of the main system 60. The power-on LED 21 lights up when the main power button 20 is turned on, while the standby LED 22 lights up when the main power button 20 is turned off.

The system controller 24 detects depressing of the main power button 20 by the user. When the main power button 20 is depressed in the off-state of the main power source, the system controller 24 acquires this depressing operation as an "on-instruction." On the other hand, when the main power button 20 is depressed in the on-state of the main power source, the system controller 24 acquires this depressing operation as an "off-instruction." The system controller 24 may acquire a power source on/off instruction similar to the foregoing instruction on the basis of an operation input to the controller 16 or the controllers 18.

The main CPU has a function of executing a game program installed in a predetermined storage unit or a ROM (Read-Only Memory) medium 44, but the sub-CPU does not have such a function. However, the sub-CPU has a function of accessing the storage unit and a function of transmitting and receiving data to and from an external device. The sub CPU is configured to perform only limited processing functions as described above, and therefore is operable with lower power consumption than the main CPU. These functions of the sub-CPU are executed in the standby state of the main CPU.

The clock 26 is a real time clock and is configured to generate current date and time information and supply the generated date and time information to the system controller 24, the sub-system 50, and the main system 60.

The device controller 30 is configured as an LSI (Large-Scale Integrated Circuit) which executes information exchange between devices, like a southbridge. As illustrated in FIG. 5, devices such as the system controller 24, the media drive 32, the USB module 34, the flash memory 36, the wireless communication module 38, the wired communication module 40, the sub-system 50, and the main system 60 are connected to the device controller 30. The device controller 30 absorbs differences in electric characteristics and differences in data transfer speed between the respective devices to control the data transfer timing.

The media drive 32 is a drive device which drives with the ROM medium 44 attached thereto, the ROM medium 44 containing games or other application software and license information recorded therein, and which reads programs, data, and the like from the ROM medium 44. The ROM medium 44 is a read-only recording medium such as an optical disk, a magneto-optical disk, and a Blu-ray disc.

The USB module 34 is a module connected to an external apparatus via a USB cable. The flash memory 36 is an auxiliary storage device constituting an internal storage. The wireless communication module 38 wirelessly communicates with the controller 16 and the controllers 18, for example, by using a communication protocol such as a Bluetooth (trademark or registered trademark) protocol, an IEEE (Institute of Electrical and Electronics Engineers) 802.11 protocol. The wired communication module 40 communicates with an external apparatus by wire and connects with the Internet, a server, and the like via an unillustrated access point, for example.

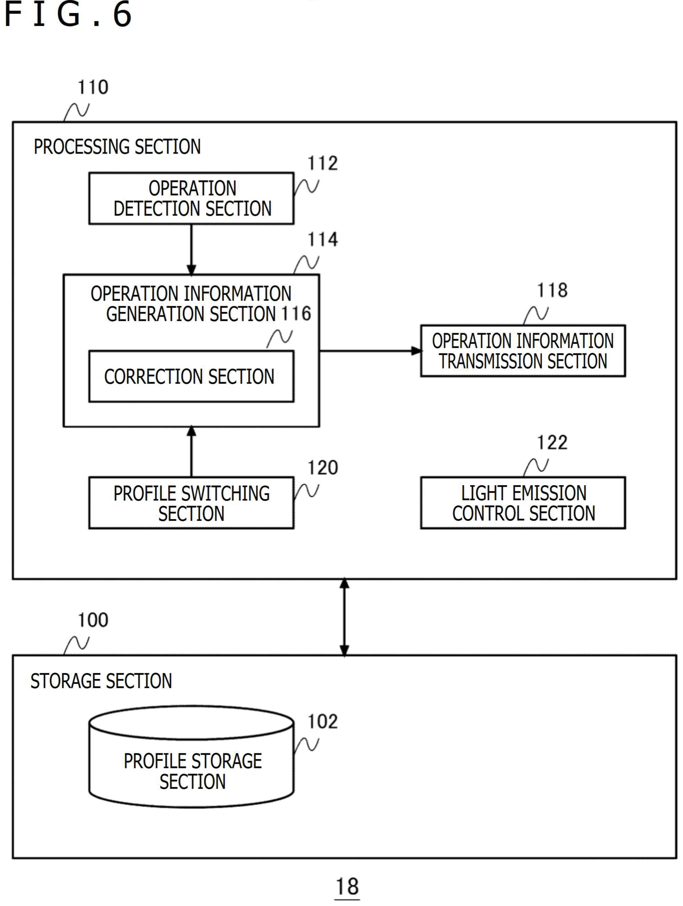

FIG. 6 is a block diagram illustrating function blocks of the controller 18. Each of the blocks illustrated in the block diagram of the present specification can be implemented in terms of hardware by an element, an electronic circuit, or a mechanical device, which typically includes a processor, a CPU, or a memory of a computer, and can be implemented in terms of software by a computer program or the like loaded to a memory. Illustrated herein are function blocks implemented by cooperative operation of these components. Accordingly, it can be understood by those skilled in the art that these function blocks can be implemented in various forms according to combinations of hardware and software.

The controller 18 includes a storage section 100 and a processing section 110. The storage section 100 corresponds to the storage unit 410 in FIG. 3 and stores data referred to or updated by the processing section 110. The storage section 100 includes a profile storage section 102.

The profile storage section 102 includes a non-volatile memory which stores a plurality of pieces of profile information. The profile storage section 102 stores the plurality of pieces of profile information in association with different slots. For example, the profile storage section 102 may store up to four pieces of profile information in association with up to four slots. The profile information according to the embodiment includes information associated with a posture of the controller 18 selected by the user, i.e., information associated with the positional relation between the analog stick unit 402 and the button unit 404.

During shipment of the controller 6 from a factory, a default profile is stored in the profile storage section 102 in association with one slot. The default profile is profile information in which values of function assignments to the respective buttons, sensitivity, a dead zone, and the like are set to default values. The user is not allowed to edit or delete the default profile. For other slots, new profile information customized by the user can be stored, and existing profile information can be edited or deleted.

The processing section 110 includes an operation detection section 112, an operation information generation section 114, an operation information transmission section 118, a profile switching section 120, and a light emission control section 122. The operation information generation section 114 includes a correction section 116. A computer program (e.g., firmware) equipped with a plurality of the foregoing functions may be stored in the storage unit 92 of the controller 6. The processor 96 of the controller 6 may load this computer program into a main memory and execute the loaded computer program to perform the plurality of foregoing functions.

On the basis of an operation input to the controller 18 from the user or an instruction issued from the information processing device 12, the profile switching section 120 sets any one of the plurality of pieces of profile information stored in the profile storage section 102, as profile information to be applied to the operation input to the controller 18 (hereinafter also referred to as an "applicable profile"). In other words, the profile switching section 120 switches the applicable profile of the controller 18 on the basis of an operation input to the controller 18 from the user or an instruction issued from the information processing device 12.

The controller 18 according to the embodiment includes a profile edit mode as an operation mode. Processes executed in the profile edit mode includes a process for assisting the user to assign a function as desired to any button of the controller 18. The profile switching section 120 functioning as an applying section applies setting information in which an edit-related function enabled in the profile edit mode is assigned to a button located at a predetermined position among the plurality of buttons of the controller 18, to operate the controller 18. Specifically, the profile switching section 120 switches a current profile to a profile edit mode profile where the edit-related function is assigned to the button at the predetermined position, at the time of transition to the profile edit mode.

According to the embodiment, the default profile is applied to the button mapping (i.e., function assignments to respective buttons) and the sensitivity and dead zone of the analog stick as the profile edit mode profile. Meanwhile, a profile being edited is applied to the orientation of the controller 18 (i.e., the positional relation between the analog stick unit 402 and the button unit 404) as the profile edit mode profile. In other words, the profile that is making the transition to the profile edit mode is applied to the orientation.

The operation detection section 112 detects an operation input to the controller 18 from the user. For example, the operation input from the user includes an operation for depressing the center button or any of the buttons 1 to 8 and an operation for tilting the analog stick 403. The operation detection section 112 detects an analog value corresponding to an operation input to the analog stick 403, converts the detected analog value into a digital value, and gives the converted digital value to the operation information generation section 114.

The operation information generation section 114 generates user operation information to be transmitted from the controller 18 to the information processing device 12, on the basis of the applicable profile and the operation that is input to the controller 18 from the user and detected by the operation detection section 112. The operation information transmission section 118 transmits the operation information generated by the operation information generation section 114 to the information processing device 12.

For example, the operation information generation section 114 generates operation information which includes a value obtained by correcting a value based on the operation input to the analog stick 403 from the user, on the basis of the applicable profile (e.g., the positional relation between the analog stick unit 402 and the button unit 404). Moreover, in a case where depressing of a button is detected, the operation information generation section 114 generates operation information which indicates function information associated with a function assigned to the depressed button in the applicable profile. The function information may be information indicating a function itself such as a decision function or a cancel function or may be information indicating the type of a button associated with a specific function (A button, B button, etc.).

The correction section 116 corrects a value based on the operation input to the analog stick 403 from the user, on the basis of the applicable profile. Specifically, the correction section 116 corrects a value based on the operation input to the analog stick 403 from the user, on the basis of the positional relation between the analog stick unit 402 and the button unit 404, to derive a value to be input to the information processing device 12 (i.e., a value to be set as operation information).

Note that the correction section 116 further corrects the value based on the operation input to the analog stick 403 from the user, on the basis of values of the sensitivity and dead zone of the analog stick 403, which are indicated in the applicable profile. Specifically, after deriving a corrected value on the basis of the positional relation between the analog stick unit 402 and the button unit 404, the correction section 116 further corrects the corrected value on the basis of the values of the sensitivity and dead zone of the analog stick 403, to derive an input value to the information processing device 12. A known technology may be applied to the correction method based on the values of the sensitivity and the dead zone.

The light emission control section 122 controls the lighting and extinguishing of the light emitting unit 408 of the button unit 404. The light emission control section 122 causes the light emitting unit 408 to emit light in a predetermined manner in the profile edit mode. For example, the light emission control section 122 control the light emitting unit 408 to emit yellow light.

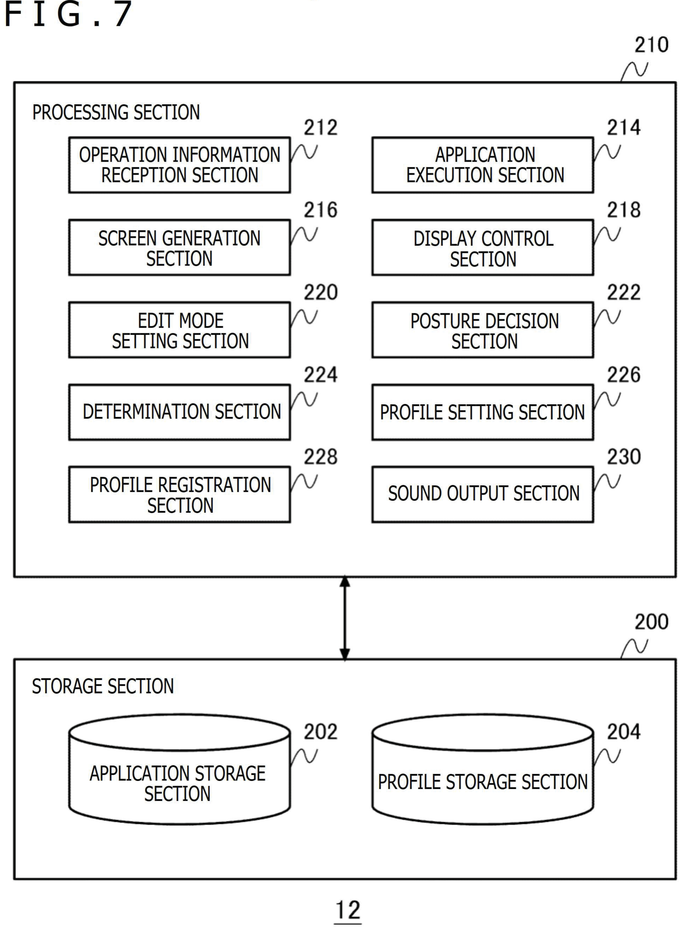

FIG. 7 is a block diagram illustrating function blocks of the information processing device 12. The information processing device 12 includes a storage section 200 and a processing section 210. The processing section 210 executes various types of information processing. The processing section 210 is implemented by a processor of the information processing device 12, and may be implemented by the main system 60 illustrated in FIG. 5, for example. The storage section 200 stores data referred to or updated by the processing section 210. The storage section 200 can include the flash memory 36 and the ROM medium 44 illustrated in FIG. 5.

The storage section 200 includes an application storage section 202 and a profile storage section 204. The application storage section 202 stores data of applications that can be executed by the information processing device 12. Unless specified otherwise, each of the "applications" explained in the present specification includes not only application software such as game programs but also system software for performing the basic management and control of the information processing device 12.

The profile storage section 204 stores profile information of each of the plurality of controllers (controller 16, controller 18a, and controller 18b), which is given from the corresponding controller as notification. Moreover, the profile storage section 204 stores information associated with the current applicable profile of each controller and given from the corresponding controller as notification. For example, the profile storage section 204 stores which of the slots 1 to 4 corresponds to the applicable profile. Note that the profile storage section 204 can store a plurality of pieces of profile information (five or more pieces of profile information in the embodiment) for each of the controllers. With the information processing device 12 storing five or more pieces of profile information, the user can select one of these pieces of profile information and store the selected profile information in the controller 18.

The processing section 210 includes an operation information reception section 212, an application execution section 214, a screen generation section 216, a display control section 218, an edit mode setting section 220, a posture decision section 222, a determination section 224, a profile setting section 226, a profile registration section 228, and a sound output section 230. A computer program (e.g., system software or application software) equipped with a plurality of the foregoing functions may be stored in the storage section 200. The processor of the information processing device 12 may load this computer program into a main memory and execute the loaded computer program to perform the plurality of foregoing functions.

The operation information reception section 212 receives operation information input to the controller 18 from the user and transmitted from the controller 18 connected to the information processing device 12.

The application execution section 214 executes applications stored in the application storage section 202 (including application software and system software as described above). For example, the application execution section 214 executes an application according to the operation information input to the controller 18 from the user and gives information associated with a result of the execution of the application to the screen generation section 216.

The screen generation section 216 generates data of a screen indicating the result of the execution of the application by the application execution section 214. For example, in a case where the information processing device 12 and the controller 18 are in the profile edit mode, the screen generation section 216 generates data of an edit screen including content for assisting profile editing. The edit screen includes an orientation screen 300, a button assignment customization screen 310, and a sensitivity adjustment screen 320 described later.

The display control section 218 controls information display on the display device 14. The display control section 218 outputs the screen data generated by the screen generation section 216 to the display device 14 to display various types of screens on the display device 14. A combination of the screen generation section 216 and the display control section 218 can also be referred to as a screen display section. In the following description, such a simple expression that "the screen generation section 216 displays a screen" will also be used.

The edit mode setting section 220 functioning as a transition instruction section makes the transition of the information processing device 12 and the controller 18 to the profile edit mode according to an operation performed by the user.

The posture decision section 222 functioning as a decision section decides a posture of the controller 18 according to an operation input to the controller 18 in the profile edit mode. Specifically, the posture decision section 222 decides the positional relation between the analog stick unit 402 and the button unit 404.

The profile setting section 226 sets profile information including information associated with the positional relation between the analog stick unit 402 and the button unit 404. The profile registration section 228 functioning as a setting information registration section transmits the profile information set by the profile setting section 226 to the controller 18 and causes the controller 18 to store the transmitted profile information. The profile information further includes information indicating functions individually assigned to the plurality of buttons and is displayed in a profile edit screen during the profile edit mode.

The determination section 224 determines whether or not an essential function determined beforehand has been assigned to any one of the plurality of buttons, in a case where an end operation is input to the edit screen in the profile edit mode. The essential function is a function essential for system software operation and/or application software operation. The essential function may include at least either the decision function or the cancel function. The determination section 224 may determine whether or not a specific type of button corresponding to the essential function (e.g., A button or B button) has been assigned.

In a case where the end operation is input to the edit screen in the profile edit mode without assigning the essential function to any one of the plurality of buttons, the screen generation section 216 generates predetermined alert information. The display control section 218 displays this predetermined alert information in the edit screen. The display control section 218 ends display of the edit screen in a case where a predetermined operation is input after the display of the alert information.

Moreover, the screen generation section 216 generates a profile edit screen such that a special mode where an input state of the button continues (hereinafter also referred to as a "toggle mode") can be set for any button of the controller 18 in the profile edit mode through the profile edit screen. After the end of the edit mode, the screen generation section 216 displays, in the screen, information associated with the continuation of the input state of the button for which the toggle mode is set. The screen displayed after the end of the edit mode includes both a screen associated with execution of system software by the information processing device 12 and a screen associated with execution of application software by the information processing device 12.

The sound output section 230 transmits sound data to the display device 14 and causes the display device 14 to output sound from the speaker thereof. In a case where a predetermined operation is input during display of an adjustment screen for adjusting the sensitivity of the analog stick 403 (sensitivity adjustment screen 320 described later), the sound output section 230 causes the sound to be output in a manner corresponding to the sensitivity adjusted in this adjustment screen. According to the embodiment, the sound output section 230 raises a pitch of sound that is output according to an operation input to the analog stick 403, as the sensitivity that has undergone the adjustment in the adjustment screen increases.

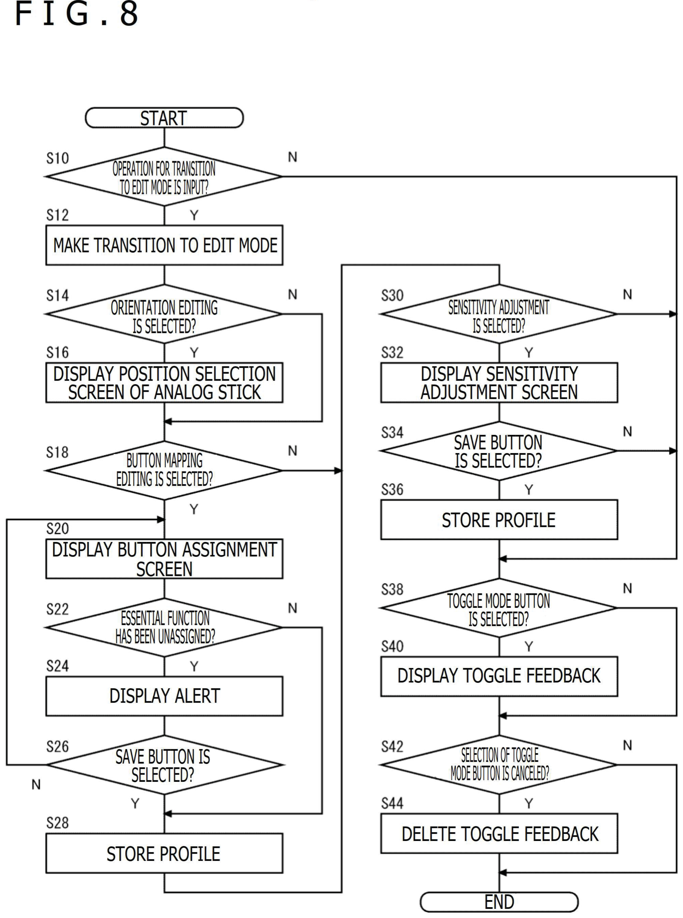

FIG. 8 is a flowchart illustrating the operation of the information processing device 12. The operation of the information processing system 10 will hereinafter be described with reference to FIG. 8.

The controller 18 samples operations input from the user to the analog stick 403, the center button, and the buttons 1 to 8 (i.e., A button, B button, etc.), at a predetermined timing, and sequentially transmits operation information associated with the acquired operation to the information processing device 12. The operation information reception section 212 of the information processing device 12 receives the operation information input to the controller 18 from the user and transmitted from the controller 18.

When an operation for giving an instruction for the transition to the profile edit mode is input from the user during display of the setting screen of the information processing device 12 (Y in S10), the edit mode setting section 220 of the information processing device 12 makes the transition of the information processing device 12 to the edit mode. Moreover, the edit mode setting section 220 transmits control information for giving an instruction for the transition to the edit mode to the controller 18 to make the transition of the controller 18 to the edit mode (S12). After the transition to the edit mode, the profile switching section 120 of the controller 18 switches the applicable profile of the controller 18 to the profile for the edit mode.

In a top screen of the edit mode, the following options are displayed: (1) orientation editing, (2) button mapping editing (button assignment), and (3) adjustment of sensitivity and dead zone of the analog stick. When the orientation is selected (Y in S14), the screen generation section 216 of the information processing device 12 generates data of an orientation screen. Thereafter, the display control section 218 causes the display device 14 to display the orientation screen (S16).

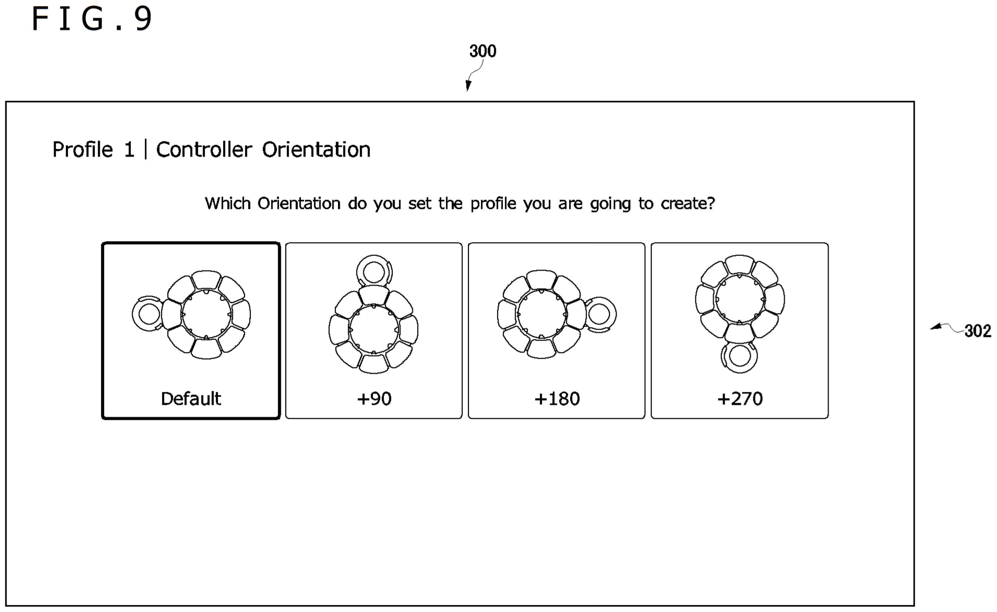

FIG. 9 illustrates an example of an orientation screen 300. The orientation screen 300 is a screen for selecting a posture of the controller 18 to be used, i.e., a screen for selecting the positional relation between the analog stick unit 402 and the button unit 404. The orientation screen 300 includes a position pattern image 302.

The position pattern image 302 is an image presenting a plurality of patterns of the positional relation between the analog stick unit 402 and the button unit 404 as options. For example, a pattern "default" in the position pattern image 302 in FIG. 9 is a pattern where the analog stick unit 402 is disposed on the left of the button unit 404. A pattern "+90" in the position pattern image 302 in FIG. 9 is a pattern obtained by rotating the default pattern clockwise by 90 degrees, i.e., a pattern where the analog stick unit 402 is disposed on the north side (the far side of the user) of the button unit 404.

A pattern "+180" in the position pattern image 302 in FIG. 9 is a pattern obtained by rotating the default pattern clockwise by 180 degrees, i.e., a pattern where the analog stick unit 402 is disposed on the right of the button unit 404. A pattern "+270" in the position pattern image 302 in FIG. 9 is a pattern obtained by rotating the default pattern clockwise by 270 degrees, i.e., a pattern where the analog stick unit 402 is disposed on the south side (the near side of the user) of the button unit 404. The user selects a pattern coinciding with the posture of the controller 18 to be used, from among the four patterns presented in the position pattern image 302.

When an operation for selecting one of the plurality of patterns presented in the position pattern image 302 is input from the user, the posture decision section 222 of the information processing device 12 decides the positional relation between the analog stick unit 402 and the button unit 404 according to the selected pattern. The posture decision section 222 decides the positional relation indicated by the selected pattern (e.g., any one of default, +90, +180, and +270) as the positional relation between the analog stick unit 402 and the button unit 404.

The user selects the pattern matching the posture of the controller 18 from the position pattern image 302 of the orientation screen 300 by operating the analog stick 403 and depresses the center button to which the decision function has been assigned. When the specific pattern is selected in the orientation screen 300, the profile setting section 226 of the information processing device 12 sets profile information including information associated with the posture of the controller 18 set in the orientation screen 300. The posture information of the controller 18 is also considered as information indicating the positional relation between the analog stick unit 402 and the button unit 404.

The profile registration section 228 of the information processing device 12 stores the profile information set by the profile setting section 226, in the profile storage section 204 of the information processing device 12. Moreover, the profile registration section 228 transmits the profile information set by the profile setting section 226, to the controller 18, and causes the profile storage section 102 of the controller 18 to store the profile information. When the orientation editing is not selected in the top screen of the edit mode (N in S14), the processing of S16 is omitted.

When the button mapping editing is selected in the top screen of the edit mode (Y in S18), the screen generation section 216 of the information processing device 12 generates data of a button assignment customization screen for assigning functions to the buttons. The display control section 218 causes the display device 14 to display the button assignment customization screen (S20).

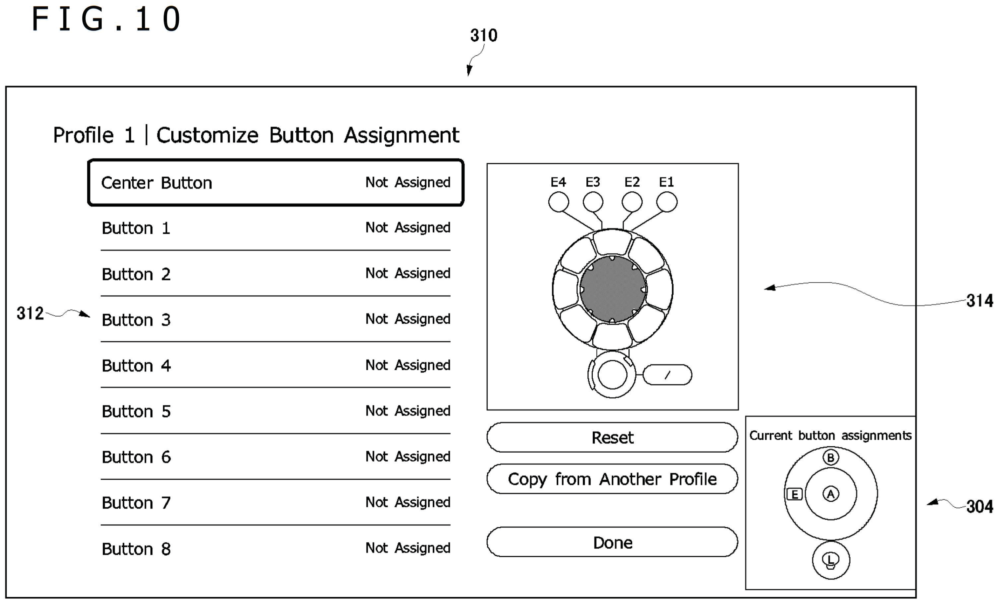

FIG. 10 illustrates an example of a button assignment customization screen 310. The button assignment customization screen 310 is a screen for assigning a function desired by the user to any of the buttons of the controller 18 according to an operation performed by the user. The button assignment customization screen 310 includes a button list 312, a controller image 314, and current assignment information 304. The button list 312 displays a list of buttons provided on the controller 18. The button list 312 includes information of the respective buttons to which functions desired by the user can be assigned, such as information indicating that no function is assigned and the names of assigned functions.

The controller image 314 is an image schematically indicating the controller 18. The screen generation section 216 generates the controller image 314 so as to coincide with the posture of the controller 18 selected in the orientation screen 300, i.e., the positional relation between the analog stick unit 402 and the button unit 404 which has been decided by the posture decision section 222. In a case where the specific button in the button list 312 is focused, the screen generation section 216 highlights the position of the focused button in the controller image 314. For example, the center button is highlighted in the controller image 314 in FIG. 10.

In the button assignment customization screen 310 in the profile edit mode, the edit-related functions enabled in the edit mode are assigned to the buttons located at predetermined positions of the controller 18. The edit-related functions are also considered as functions essential for profile editing and include, for example, a decision function (also considered as a function for proceeding the editing step to the subsequent step) and a cancel function (also considered as a function for returning the editing step to the previous step).

The current assignment information 304 indicates the edit-related functions assigned to the respective buttons in the button assignment customization screen 310. According to the embodiment, the current assignment information 304 indicates function assignment information defined by the default profile corresponding to the applicable profile in the button assignment customization screen 310. As indicated by the current assignment information 304 in FIG. 9, the function A (e.g., decision function) is assigned to the center button, the function B (e.g., cancel function) is assigned to the button 5, and a left analog stick function is assigned to the analog stick 403.

Moreover, the current assignment information 304 includes an image of the controller 18. The screen generation section 216 sets a posture of the controller 18 recognized at the time when an instruction for display of the button assignment customization screen 310 is given, as the posture of the controller 18 indicated by the current assignment information 304 (also considered as the positional relation between the analog stick unit 402 and the button unit 404 and as the orientation of the controller 18). The posture of the controller 18 recognized at the time when the instruction for transition to the button assignment customization screen 310 is given is typically the posture of the controller 18 selected by the user in the orientation screen 300. The current assignment information 304 in FIG. 10 indicates that the posture of the controller 18 recognized by the information processing device 12 is the posture corresponding to +270 in FIG. 9.

As will be described later in detail, the operation information generation section 114 of the controller 18 generates operation information associated with an operation input to the analog stick unit 402, on the basis of the positional relation between the analog stick unit 402 and the button unit 404 (i.e., the posture of the controller 18). The profile switching section 120 of the controller 18 applies a positional relation between the analog stick unit 402 and the button unit 404 at the time immediately before the transition to the profile edit mode, as the positional relation between the analog stick unit 402 and the button unit 404 in the profile edit mode.

In other words, the profile switching section 120 applies the default profile to the button mapping in the profile edit mode but does not apply the default profile to the positional relation between the analog stick unit 402 and the button unit 404. The profile switching section 120 applies the positional relation specified in the profile which is applied immediately before the transition to the profile edit mode and which is typically a profile to be edited for button mapping, as the positional relation between the analog stick unit 402 and the button unit 404 in the profile edit mode.

The user selects a desired button from the button list 312 of the button assignment customization screen 310 by using the analog stick 403, the center button, or the like of the controller 18, and inputs an operation for assigning a desired function to the selected button. For example, the functions which can be assigned may include the decision function (or A button), the cancel function (or B button), an option function, and other functions.

In the button assignment customization screen 310, to the buttons at predetermined positions to which the edit-related functions have been assigned in the default profile as indicated by the current assignment information 304, the user can assign desired functions which are to be enabled after the end of the profile edit mode, and can also assign functions different from the functions defined in the default profile. In other words, to the buttons at the predetermined positions to which the edit-related functions have been assigned in the default profile, the profile setting section 226 of the information processing device 12 allows the assignments of functions different from the functions defined in the default profile.

For example, the user can assign the cancel function (or B button) or the option function to the center button to which the decision function (or A button) has been assigned in the default profile. Moreover, the user can assign the decision function (or A button) or the option function to the button 5 to which the cancel function (or B button) has been assigned in the default profile.

Further, the toggle mode is allowed to be set for any buttons of the controller 18 in the button assignment customization screen 310. The user can select any button from the button list 312, assign a desired function to the selected button, and enable the toggle mode for this button.

Note that the information processing device 12 can simultaneously be connected to a plurality of controllers 18 (e.g., controller 18a and controller 18b) as illustrated in FIG. 1. The top screen in the edit mode includes an element for selecting the controller 18 whose profile is to be edited, from among the plurality of controllers 18. The edit mode setting section 220 of the information processing device 12 transmits an instruction for the transition to the edit mode to the controller 18 selected as a profile editing target (hereinafter referred to as a "target controller") from among the plurality of controllers 18.

The light emission control section 122 of the target controller starts lighting of the light emitting unit 408 of the button unit 404 in response to reception of the instruction for the transition to the edit mode. The button assignment customization screen 310 displayed in the edit mode includes an image which indicates the target controller and which displays lighting of the light emitting unit 408.

Specifically, the screen generation section 216 of the information processing device 12 sets the controller image 314 and the current assignment information 304 of the button assignment customization screen 310 in such a mode that a portion corresponding to the light emitting unit 408 (a circular region surrounding the center button) is illuminated. This can assist the user to easily identify the controller 18 which is the profile editing target, in a case where the plurality of controllers 18 are connected to the information processing device 12.

When a saving and ending operation (e.g., operation for selecting a Done button) is input to the button assignment customization screen 310, the determination section 224 of the information processing device 12 determines whether or not a predetermined essential function has been assigned to any one of the plurality of buttons in the button assignment customization screen 310.

Described with reference to FIG. 8 again, in a case where at least one essential function has not been assigned to any one of the plurality of buttons (Y in S22), the determination section 224 identifies the unassigned essential function. The screen generation section 216 of the information processing device 12 generates data of an alert window as notification indicating no assignment of the essential function. The display control section 218 displays the alert window superimposed on the button assignment customization screen 310 (S24).

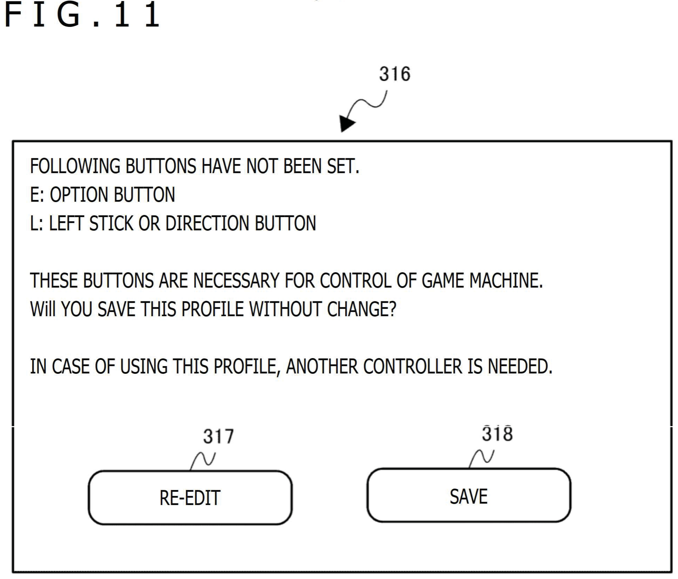

FIG. 11 illustrates an example of an alert window 316. The alert window 316 includes alert information. The alert information indicates essential functions which have not been assigned to any one of a plurality of buttons of the controller 18. Moreover, the alert information includes information for suggesting assignment of the essential function to any one of the buttons of the controller 18. The alert window 316 further includes an option for returning to the button assignment customization screen 310 and an option for storing editing details of the button assignment customization screen 310. Specifically, the alert window 316 includes a re-edit button 317 and a save button 318 provided as these options. When selection of the re-edit button 317 in the alert window 316 is detected (N in S26), the saving operation is cancelled, and the flow returns to S20. The display control section 218 continues display of the button assignment customization screen 310.

When selection of the save button 318 in the alert window 316 is detected (Y in S26), the profile setting section 226 of the information processing device 12 sets profile information which includes information indicating the function assignments to the respective buttons set in the button assignment customization screen 310. The information indicating the function assignments to the respective buttons includes information indicating enabling and disabling of the toggle mode for the respective buttons.

The profile registration section 228 of the information processing device 12 stores the profile information set by the profile setting section 226, in the profile storage section 204 of the information processing device 12. Moreover, the profile registration section 228 transmits the profile information set by the profile setting section 226, to the controller 18, and causes the profile storage section 102 of the controller 18 to store the profile information (S28).

In the information processing system 10 of the embodiment, the plurality of controllers 18 and the controller 16 can be connected to the information processing device 12 as illustrated in FIG. 1. Therefore, even when an essential function has not been assigned to one of the controllers 18, there is a possibility that this essential function will be assigned to the other controller 18 or the controller 16. Accordingly, storage of the profile including the unassigned essential function is allowed in profile editing for the one controller 18. In this manner, the degree of freedom of function assignments to the respective buttons of the controller 18 can be increased.

Note that, in a case where the essential function has been assigned to none of the controllers associated with the user ID, the application execution section 214 of the information processing device 12 may detect this fact on the basis of button assignment information of all the controllers associated with the user ID, at the time of an application start or an application restart from the profile edit mode. In a case where it is detected that the essential function has been assigned to none of the controllers, the application execution section 214 may display a message indicating no assignment of the essential function, i.e., a message for suggesting assignment of the essential function, on the display before execution of the application.

In a case where all essential functions have been assigned to some of the plurality of buttons (N in S22), the flow proceeds to the processing of storing the profile in S28 with the processing of S24 and S26 omitted. When the button mapping editing is not selected in the top screen in the edit mode (N in S18), the processing of S20 to S28 is omitted.

When sensitivity adjustment of the analog stick is selected in the top screen of the edit mode (Y in S30), the screen generation section 216 of the information processing device 12 generates data of the sensitivity adjustment screen. The display control section 218 causes the display device 14 to display the sensitivity adjustment screen (S32).

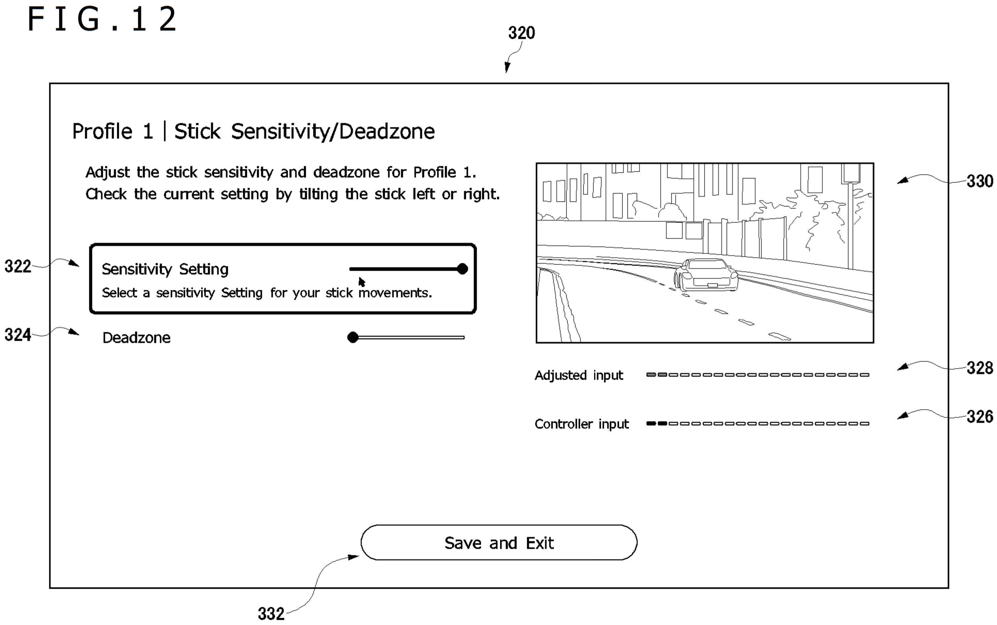

FIG. 12 illustrates an example of the sensitivity adjustment screen 320. The sensitivity adjustment screen 320 includes a sensitivity setting gauge 322, a dead zone setting gauge 324, a controller input value indicator 326, an adjusted input value indicator 328, a sensitivity indication moving image 330, and a save button 332.

The sensitivity setting gauge 322 is an object operated by the user to adjust and set the sensitivity of the analog stick 403. The sensitivity decreases with a shift of the sensitivity setting gauge 322 to the left, and increases with a shift of the sensitivity setting gauge 322 to the right. The sensitivity may be a rate (i.e., slope) of a change of an output value from the analog stick 403 to a change of an input value to the analog stick 403. The slope may increase with an increase of the sensitivity, and may decrease with a decrease of the sensitivity. Notification of the sensitivity setting value of the sensitivity setting gauge 322 is sequentially issued from the information processing device 12 to the controller 18.

The dead zone setting gauge 324 is an object operated by the user to adjust and set a size of the dead zone of the analog stick 403. The dead zone narrows with a shift of the dead zone setting gauge 324 to the left, and widens with a shift of the dead zone setting gauge 324 to the right. As described above, the dead zone may be a range where, even when an operation is input to the analog stick 403, a value corresponding to the operation is not input to the information processing device 12. In other words, the dead zone may be a width of play of the analog stick 403. Notification of the dead zone setting value of the dead zone setting gauge 324 is sequentially issued from the information processing device 12 to the controller 18.

The controller input value indicator 326 is an object indicating a level of a tilt operation input to the analog stick 403 (hereinafter also referred to as a "controller input value"). The screen generation section 216 shifts a scale of the controller input value indicator 326 according to the tilt operation input to the analog stick 403 from the user. The screen generation section 216 shifts the scale to the right as the level of the tilt operation input to the analog stick 403 increases, i.e., a tilt amount of the analog stick 403 increases.

The adjusted input value indicator 328 is an object which indicates a value obtained by adjusting a level of the tilt operation input to the analog stick 403 on the basis of the sensitivity set by the sensitivity setting gauge 322 (hereinafter also referred to as an "adjusted input value"). The screen generation section 216 shifts the scale to the right as the adjusted input value increases.

The sensitivity indication moving image 330 is a moving image for indicating a state of the sensitivity. The sensitivity indication moving image 330 according to the embodiment is an animation illustrating a state where a car approaches and passes by. In a modified example, the sensitivity indication moving image 330 may be a video of a three-dimensional object captured by a camera moving from the side to the front of the three-dimensional object with the camera directed toward the three-dimensional object.

In a case where a predetermined operation (tilt operation in the embodiment) is input to the analog stick 403 during display of the sensitivity adjustment screen 320, the screen generation section 216 reproduces the sensitivity indication moving image 330 in a manner corresponding to the sensitivity adjusted by the sensitivity setting gauge 322. Specifically, the screen generation section 216 increases a reproduction speed of the sensitivity indication moving image 330 reproduced in response to the operation input to the analog stick 403, as the sensitivity adjusted by the sensitivity setting gauge 322 increases.

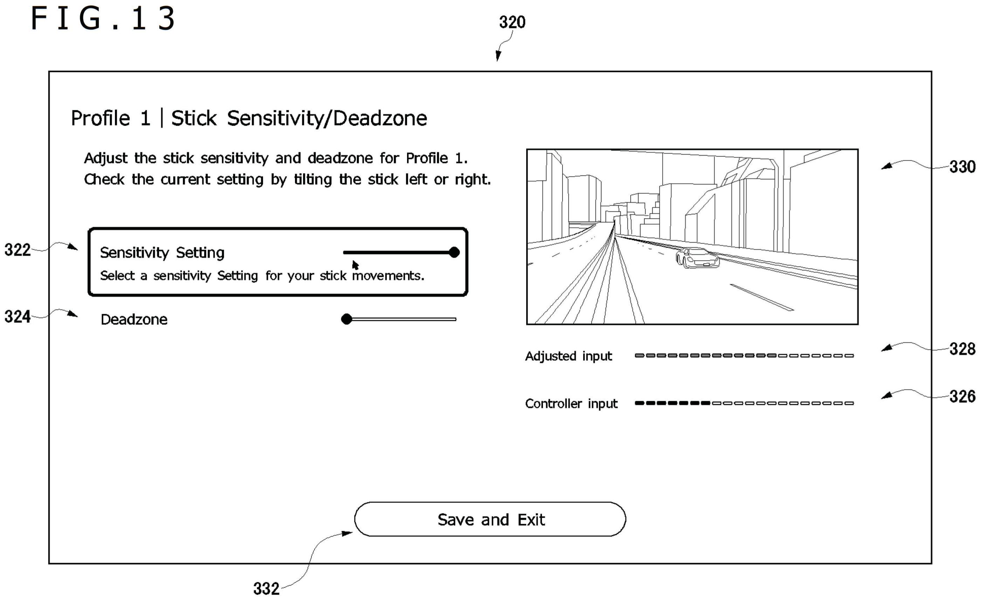

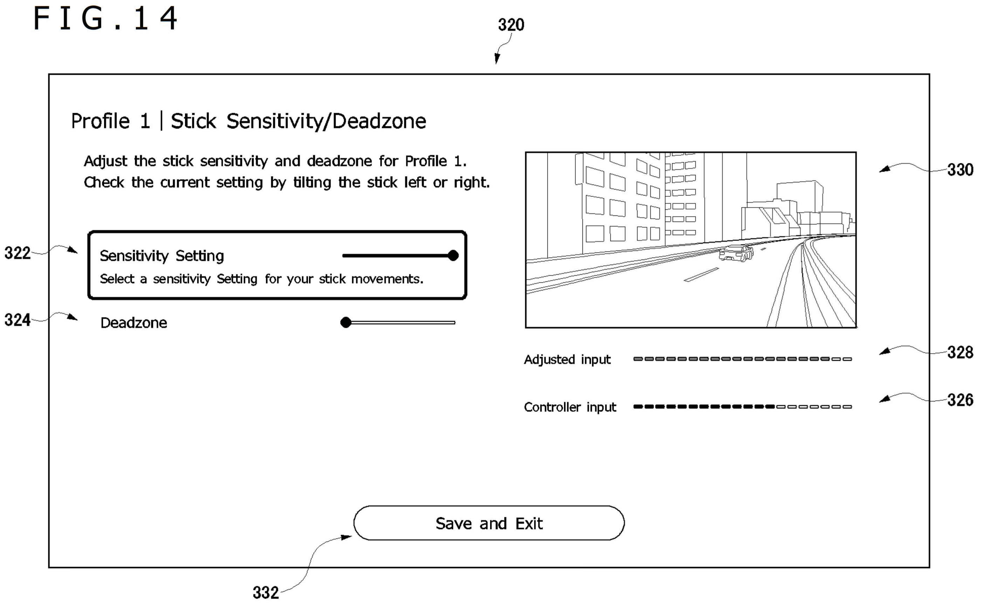

FIGS. 12, 13, and 14 illustrate a change of the sensitivity adjustment screen 320 in time series in a case where a high sensitivity is set. Content of the sensitivity adjustment screen 320 switches in order of FIGS. 12, 13, and 14. As illustrated in the controller input value indicator 326 in each of the figures, the user gradually increases the tilt amount of the analog stick 403.

The operation information generation section 114 (correction section 116) of the controller 18 acquires a controller input value as an input value based on the tilt amount of the analog stick 403. The operation information generation section 114 (correction section 116) adjusts the acquired controller input value on the basis of the sensitivity set by the sensitivity setting gauge 322, to obtain an adjusted input value. The operation information transmission section 118 of the controller 18 transmits operation information including both the controller input value and the adjusted input value to the information processing device 12.

The screen generation section 216 of the information processing device 12 sets the scale of the controller input value indicator 326 on the basis of the controller input value indicated by the operation information. Moreover, the screen generation section 216 sets the scale of the adjusted input value indicator 328 on the basis of the adjusted input value indicated by the operation information. The sensitivity is high in this example. Accordingly, the adjusted input value increases in a relatively large scale with a relatively small increase of the controller input value.

Moreover, respective scale positions of the adjusted input value indicator 328 correspond to play time positions of the sensitivity indication moving image 330. The screen generation section 216 reproduces the sensitivity indication moving image 330 in synchronization with a change of the scale of the adjusted input value indicator 328. In the case of a high sensitivity, the scale of the adjusted input value indicator 328 rapidly increases. Accordingly, the reproduction speed of the sensitivity indication moving image 330 increases. That is, the screen generation section 216 reproduces the sensitivity indication moving image 330 at a higher speed as the sensitivity of the analog stick 403 is set higher in the sensitivity adjustment screen 320. The sensitivity indication moving image 330 in each of FIGS. 12 to 14 indicates the state where a car approaches and passes by at a high speed.

Further, the respective scale positions of the adjusted input value indicator 328 also correspond to reproduction time positions of predetermined sensitivity indication sound for indicating the state of sensitivity. For example, the sensitivity indication sound may be sound produced from a musical instrument. The sound output section 230 reproduces the sensitivity indication sound in synchronization with a change of the scale of the adjusted input value indicator 328. In the case of a high sensitivity, the scale of the adjusted input value indicator 328 rapidly increases. Accordingly, the reproduction speed of the sensitivity indication sound relatively increases. That is, the sound output section 230 increase a tempo of the sensitivity indication sound as the sensitivity of the analog stick 403 is set higher in the sensitivity adjustment screen 320.

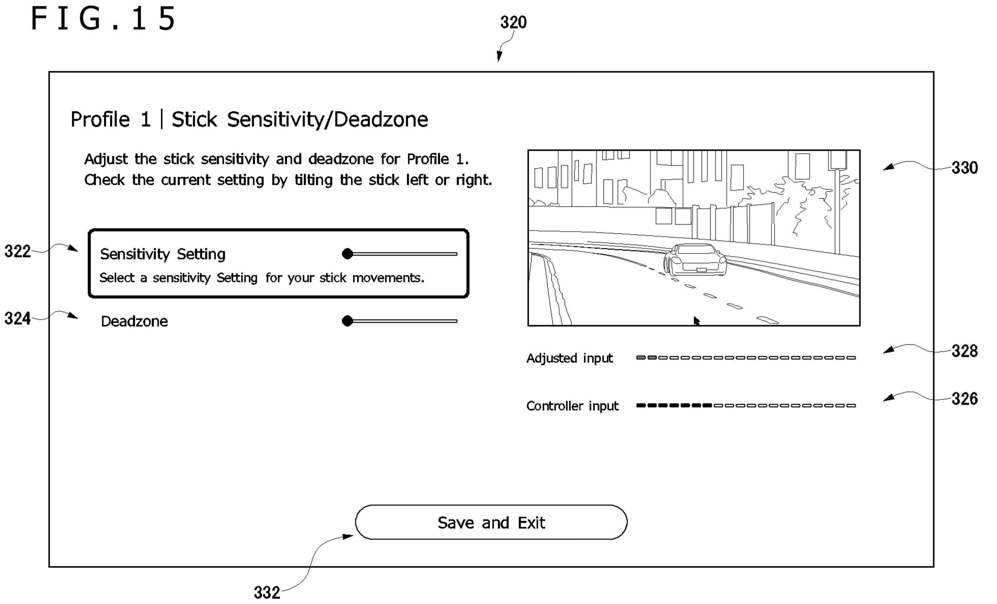

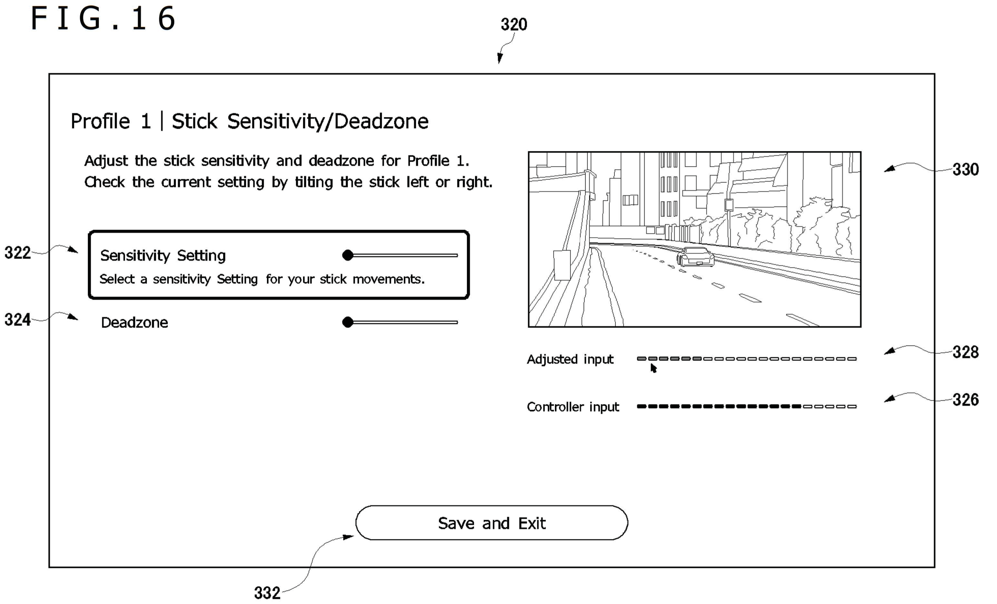

FIGS. 15 and 16 illustrate a change of the sensitivity adjustment screen 320 in time series in a case where a low sensitivity is set. Content of the sensitivity adjustment screen 320 switches in order of FIGS. 15 and 16. As illustrated in the controller input value indicator 326 in each of the figures, the user gradually increases the tilt amount of the analog stick 403. The sensitivity is low in this example. Accordingly, a change of the adjusted input value is smaller than a change of the controller input value.

In the case of a low sensitivity, the scale of the adjusted input value indicator 328 slowly increases. Accordingly, the reproduction speed of the sensitivity indication moving image 330 increases. That is, the screen generation section 216 reproduces the sensitivity indication moving image 330 at a lower speed as the sensitivity of the analog stick 403 is set lower in the sensitivity adjustment screen 320. The sensitivity indication moving image 330 in each of FIGS. 12 to 14 indicates the state where a car approaches and passes by slowly.

Moreover, in the case of a low sensitivity, the scale of the adjusted input value indicator 328 slowly increases. Accordingly, the reproduction speed of the sensitivity indication sound relatively decreases. That is, the sound output section 230 lowers a tempo of the sensitivity indication sound as the sensitivity of the analog stick 403 is set lower in the sensitivity adjustment screen 320.

Described with reference to FIG. 8 again, in response to selection of the save button 332 in the sensitivity adjustment screen 320 (Y in S34), the profile setting section 226 of the information processing device 12 sets profile information including setting values of the sensitivity and dead zone set in the sensitivity adjustment screen 320. The profile registration section 228 of the information processing device 12 causes the profile storage section 204 of the information processing device 12 and the profile storage section 102 of the controller 18 to store the profile information (S36).

When the save button 332 is not selected in the sensitivity adjustment screen 320 (N in S34), the processing of S36 is omitted. When the sensitivity adjustment of the analog stick is not selected in the top screen of the edit mode (N in S30), the processing of S32 to S36 is omitted. When an operation for giving an instruction for the transition to the profile edit mode is not input from the user (N in S10), the processing of S12 to S36 is omitted.

During the transition to the profile edit mode, the user can select the controller 18 holding the editing target profile. In the case where the controller 18a and the controller 18b are connected to the information processing device 12 as illustrated in FIG. 1, posture information registration, function assignments to the buttons, and sensitivity setting can be performed for each of the controller 18a and the controller 18b. For example, the user can use the controller 18a in the default posture in FIG. 9, and use the controller 18b in the posture corresponding to +180 in FIG. 9. In addition, the user can assign the same function to both the button of the controller 18a and the button of the controller 18b. Moreover, the user can also assign a specific function to only either the button of the controller 18a or the button of the controller 18b.

In response to input of an operation to the analog stick 403 or each of the buttons of the controller 18 after the end of the profile edit mode, the operation information generation section 114 of the controller 18 generates operation information by applying a specific profile (e.g., a profile designated by the user) stored in the profile storage section 102. For example, the operation information generation section 114 generates operation information indicating a function (e.g., decision function, A function, or B function) assigned to the button to which the operation has been input in the applicable profile. The operation information transmission section 118 of the controller 18 transmits the operation information to the information processing device 12. The application execution section 214 of the information processing device 12 executes system software and application software according to the operation information transmitted from the controller 18.

As described above, the button assignment customization screen 310 can be ended without assignment of an essential function to any button. This configuration increases the degree of freedom of function assignments to the buttons, but may cause problems in the operation of system software or application software.

In view of this, the profile switching section 120 of the controller 18 switches the current profile to a profile where an essential function has been assigned to at least one of the plurality of buttons of the controller 18, in a case where a predetermined operation is input. According to the embodiment, this predetermined operation is an operation for holding down the profile button 406 for a predetermined period of time or longer. The profile to which the current profile is switched may be a default profile where each of the decision function, the cancel function, the option function, and the left analog stick function is assigned to at least one button. This makes it possible to prevent problems from occurring in the operation of system software or application software while increasing the degree of freedom of function assignments to the buttons.

The process performed by the controller 18 will be described in more detail. The correction section 116 of the operation information generation section 114 corrects a value based on an operation input to the analog stick 403, on the basis of the positional relation between the analog stick unit 402 and the button unit 404 as indicated in the applicable profile, to derive a value to be set for operation information. The value based on the operation input to the analog stick 403 is output value information in a two-dimensional plane as illustrated in FIG. 4, for example. Specifically, this output value information includes an output value in the X-axis direction and an output value in the Y-axis direction.

In a case where the positional relation between the analog stick unit 402 and the button unit 404 is "default" in FIG. 9, the correction section 116 may omit the correction of the output value in the X-axis direction and the output value in the Y-axis direction. In other words, when the posture of the controller 18 is a default posture, only sensitivity correction may be executed without execution of position correction. In a case where the positional relation between the analog stick unit 402 and the button unit 404 is "+90" in FIG. 9, the correction section 116 may obtain values of the corrected position by rotating the output value in the X-axis direction and the output value in the Y-axis direction clockwise by 90 degrees.

In a case where the positional relation between the analog stick unit 402 and the button unit 404 is "+180" in FIG. 9, the correction section 116 may obtain values of the corrected position by rotating the output value in the X-axis direction and the output value in the Y-axis direction clockwise by 180 degrees. In a case where the positional relation between the analog stick unit 402 and the button unit 404 is "+270" in FIG. 9, the correction section 116 may obtain values of the corrected position by rotating the output value in the X-axis direction and the output value in the Y-axis direction clockwise by 270 degrees. The correction section 116 executes sensitivity correction for the values of the corrected position on the basis of sensitivity information indicated by the applicable profile.

In a modified example, the information processing device 12 having received operation information from the controller 18 may execute processing for applying a profile other than sensitivity correction. For example, the processing for applying a profile other than sensitivity correction includes decision of an operation direction based on the posture of the controller 18 (the positional relation between the analog stick unit 402 and the button unit 404) and identification of functions assigned to the buttons of the controller 18.

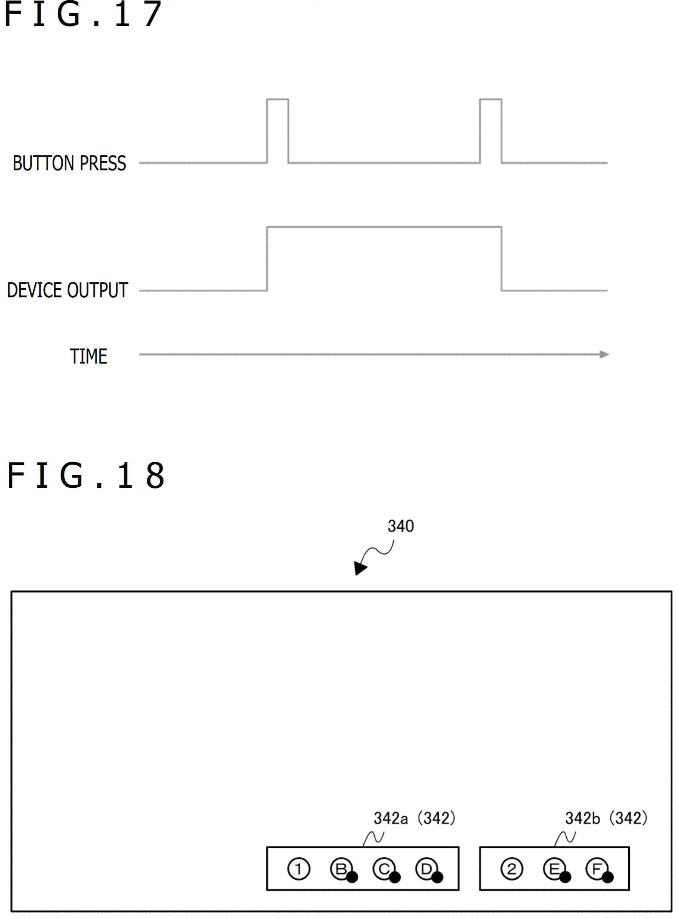

FIG. 17 illustrates behavior of a button for which the toggle mode is enabled. The user can independently set the toggle mode for each of the buttons of the controller 18. In response to detection of one short pressing operation (short depressing operation) of the button for which the toggle mode is enabled (also referred to as a "toggle mode button" herein), the operation information generation section 114 of the controller 18 generates operation information indicating the continuation of the input state of the toggle mode button, as in the case of the reception of the holding down operation. It is assumed in the embodiment that the input state of the toggle mode button starts in response to the short pressing operation and continues. The operation information generation section 114 may successively generate a plurality of pieces of information indicating the depressing of the toggle mode button in a predetermined cycle, and the operation information transmission section 118 may successively transmit the plurality of pieces of operation information to the information processing device 12.

Moreover, the input state of the toggle mode button continues until the short pressing operation is input again to the corresponding toggle mode button. When detecting that the short pressing operation is input again to the toggle mode button while the input state of the toggle mode button continues, the operation information generation section 114 ends generation of the operation information indicating the continuation of the input state of the toggle mode button.

Described with reference to FIG. 8 again, when an operation for selecting the toggle mode button (short pressing operation in the embodiment) is input (Y in S38), the screen generation section 216 of the information processing device 12 displays toggle feedback including information associated with the continuation of the input state of the toggle mode button (hereinafter also referred to as "toggle mode button information") (S40). When the operation for selecting the toggle mode button is not input (N in S38), the processing of S40 is omitted. In addition, when an operation for cancelling the selection of the toggle mode button is input (in the embodiment, the short pressing operation is input again) (Y in S42), the display of the toggle feedback is ended (S44). When the operation for cancelling the selection of the toggle mode button is not input (N in S42), the processing of S44 is omitted.

FIG. 18 illustrates an example of an application screen 340. In this example, the controller 18a and the controller 18b are connected to the information processing device 12, and the toggle mode is enabled for a plurality of buttons of each of the controller 18a and the controller 18b. The screen generation section 216 of the information processing device 12 separately displays toggle mode button information for each of the controllers connected to the information processing device 12. In the embodiment, the toggle mode is enabled for a certain button, and the screen generation section 216 displays toggle mode button information of the relevant button while the input state of this button continues.

In the example in FIG. 18, the screen generation section 216 sets toggle feedback 342a and toggle feedback 342b (in a case of collectively referring to the toggle feedback 342a and the toggle feedback 342b, they are called "toggle feedback 342") for the application screen 340. The toggle feedback 342a includes toggle mode button information associated with the controller 18a. The toggle mode button information associated with the controller 18a includes identification information of the controller 18a (indicated by circled numeral 1 in FIG. 18). The toggle feedback 342b includes toggle mode button information associated with the controller 18b. The toggle mode button information associated with the controller 18b includes identification information of the controller 18b (indicated by circled numeral 2 in FIG. 18).

The toggle mode button information includes identification information of buttons for which the toggle mode is set (button icons in FIG. 18). The identification information of the buttons may be information indicating functions assigned to the buttons (e.g., icons or marks indicating the A function and the B function). Moreover, the identification information of the buttons may include numbers of the buttons (e.g., 1 to 8). The toggle feedback 342a in FIG. 18 indicates that the toggle mode has been enabled for a B button, a C button, and a D button of the controller 18a and that the input states of these buttons continue. For example, in a case where the toggle mode has been enabled for an A button provided on the controller 18a and where the input state of the A button starts in response to a short press of the A button and continues, the screen generation section 216 adds identification information of the A button to the toggle feedback 342a.

The toggle feedback 342b in FIG. 18 indicates that the toggle mode has been enabled for an E button and an F button of the controller 18b and that the input states of these buttons continue. For example, in a case where a short press of the F button is input again and where the continuation of the input state of the F button is thus ended, the screen generation section 216 deletes information associated with the F button from the toggle feedback 342b. While FIG. 18 illustrates the application screen 340 by way of example, the toggle feedback 342 is also displayed in a system screen associated with execution of system software in a similar manner.

In addition, in the embodiment, the screen generation section 216 displays a set of identification information of a certain button and a predetermined mark (black circle in FIG. 18) in the toggle feedback 342 on the condition that the toggle mode has been enabled for this button and that the input state of this button continues. In a modified example, the screen generation section 216 may continuously display identification information of a certain button in the toggle feedback 342 in a case where the toggle mode has been enabled for this button, regardless of whether or not the input state of this button continues. The screen generation section 216 may add the foregoing mark to the identification information of this button while the input state of this button continues. Moreover, in a case where the continuation of the input state of this button is ended, the screen generation section 216 may delete the mark added to the identification information of this button. Furthermore, between a case where the input state of a button for which the toggle mode has been enabled continues and a case where the continuation of the input state is ended, the screen generation section 216 may set different colors for the icon of this button or may set different colors for a frame containing the icon of this button.

The screen generation section 216 displays, as the toggle mode information, information associated with the continuation of the input states of up to a predetermined number of buttons among a plurality of buttons for which the toggle mode has been enabled. That is, the maximum number (the predetermined number described above) of button icons which can be displayed in a piece of the toggle feedback 342 is determined beforehand. In addition, the maximum number of button icons which can be displayed in the toggle feedback 342 set for each of the controllers 18 differs between a case where there is only one controller 18 having buttons for which the toggle mode is enabled and a case where there are a plurality of controllers 18 having buttons for which the toggle mode is enabled. Typically, the maximum number of button icons which can be displayed in each piece of the toggle feedback 342 decreases as the number of controllers 18 having buttons for which the toggle mode is enabled increases, i.e., the number of pieces of the toggle feedback 342 displayed in the screen increases.

For example, in a case where there is only one controller 18 having buttons for which the toggle mode is enabled and where only one piece of the toggle feedback 342 is displayed in the screen, the maximum number of button icons which can be displayed in the toggle feedback 342 may be 11. Meanwhile, in a case where there are two controllers 18 having buttons for which the toggle mode is enabled and where two pieces of the toggle feedback 342 are displayed in the screen, the maximum number of button icons which can be displayed in each piece of the toggle feedback 342 may be eight.

Further, in a case where the number of buttons for which the toggle mode has been enabled among the plurality of buttons of the controller 18 and the input states of which continue has exceeded the maximum number of buttons which can be displayed, the screen generation section 216 further displays the number exceeding the maximum number, in the toggle feedback 342. For example, in a case where the number of buttons for which the toggle mode has been enabled and the input states of which continue is 10 while the maximum number of button icons which can be displayed in the toggle feedback 342 is eight (in a case where a plurality of pieces of the toggle feedback 342 are displayed), the screen generation section 216 may dispose eight button icons in the toggle feedback 342 and set "+2" on the side of these button icons as the number exceeding the maximum number.

According to the information processing system 10 of the embodiment, the user can freely customize the positional relation between the analog stick unit 402 and the button unit 404 of the controller 18. Accordingly, it is possible to improve adaptivity or usability of the controller 18 for various users.

In addition, during profile editing, the profile for profile editing (button assignment) can be used regardless of the type of the profile previously applied. Accordingly, the operation in the edit mode can reliably be performed even in a state where the user has not assigned functions to the buttons on the controller 18. Moreover, in a case where functions essential for the operation of system or application are not assigned to the buttons, an alert is displayed to suggest assignments of the essential functions to the user. If desired, the user is also allowed to end the editing without assignments of the essential functions. In this manner, the degree of freedom of function assignments to the buttons can increase.

In addition, according to the information processing system 10, the states of the buttons for which the toggle mode has been enabled can be presented to the user in an easily understandable manner in the application screen or the system screen. Besides, according to the information processing system 10, an adjustment status of sensitivity can be presented to the user in an easily understandable manner in the sensitivity adjustment screen 320 by using both visual information and auditory information.

The present invention has been described above on the basis of the embodiment. This embodiment has been presented only by way of example, and therefore, it should be understood by those skilled in the art that various modifications can be made for combinations of respective constituent elements and respective processes and that these modifications also fall within the scope of the present invention.

A first modification will be described. According to the embodiment described above, the posture decision section 222 of the information processing device 12 decides the positional relation between the analog stick unit 402 and the button unit 404 according to a pattern selected by the user in the orientation screen 300. In the modification, the posture decision section 222 may decide the positional relation between the analog stick unit 402 and the button unit 404 according to an operation input to the analog stick unit 402 (analog stick 403) in a predetermined direction in the profile edit mode in a state where the controller 18 is disposed with its orientation set as desired.

The state where the controller 18 is disposed with its orientation set as desired is also considered as a state where the analog stick unit 402 and the button unit 404 are disposed according to any positional relation desired by the user. For example, any one of the four patterns indicated in the position pattern image 302 in FIG. 9 may be used. The input operation in the predetermined direction may be an operation for tilting the analog stick 403 toward the user.

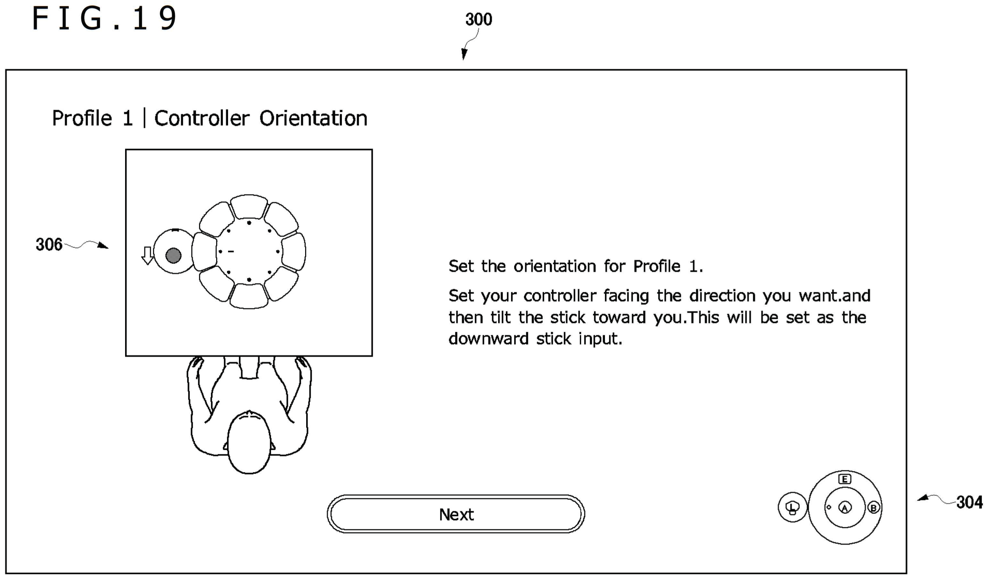

FIG. 19 illustrates an example of the orientation screen 300 according to the modification. The orientation screen 300 according to the modification includes information for suggesting to the user that the analog stick 403 should be tilted to the front. The posture decision section 222 may decide the positional relation between the analog stick unit 402 and the button unit 404 on the basis of an output value in the X-axis direction and an output value in the Y-axis direction which are obtained upon the tilt operation of the analog stick 403 and detected during display of the orientation screen 300.

For example, suppose that the output value in the X-axis direction ranges from 0 to 255 (the output value at the return position 174 is 128) and that the output value in the Y-axis direction ranges from 0 to 255 (the output value at the return position 174 is 128), as illustrated in FIG. 4. In this instance, in a case where (X-axis direction output value, Y-axis direction output value) approximates to (128, 255), the posture decision section 222 may determine that the analog stick unit 402 is disposed on the left of the button unit 404 as indicated in the "default" of the position pattern image 302 in FIG. 9. Further, in a case where (X-axis direction output value, Y-axis direction output value) approximates to (255, 128), the posture decision section 222 may determine that the analog stick unit 402 is disposed on the north side of the button unit 404 as indicated in the "+90" of the position pattern image 302 in FIG. 9.

In addition, in a case where (X-axis direction output value, Y-axis direction output value) approximates to (128, 0), the posture decision section 222 may determine that the analog stick unit 402 is disposed on the right of the button unit 404 as indicated in the "+180" of the position pattern image 302 in FIG. 9. Moreover, in a case where (X-axis direction output value, Y-axis direction output value) approximates to (0, 128), the posture decision section 222 may determine that the analog stick unit 402 is disposed on the south side of the button unit 404 as indicated in the "+270" of the position pattern image 302 in FIG. 9.

A second modification will be described. In the embodiment described above, the toggle mode is a mode for continuing the input state of the button. In the modification, the toggle mode may be a mode for intermittently continuing the input state of the button in a partial period or the whole period after depressing of the button. Intermittently continuing may also be referred to as continuing the input state of the button with intervals of a predetermined period of time (non-input states). For example, in response to detection of the short pressing operation of the toggle mode button, the operation information generation section 114 of the controller 18 may continuously generate operation information indicating that the toggle mode button is in the input state, for a predetermined first period, then suspend the generation of the operation information indicating that the toggle mode button is in the input state, for a predetermined second period, and repeat the generation and the suspension as described above.

A third modification will be described. In the embodiment described above, the positioning and the sensitivity adjustment are carried out for the analog stick unit 402 (analog stick 403). The technical idea associated with the positioning and sensitivity adjustment according to the embodiment is applicable to various operation members to which operations to be detected as information in the two-dimensional plane are input from the user. For example, the controller 18 may include a slide operation member instead of the analog stick unit 402. The slide operation member may be an operation member having a slider portion capable of sliding in a direction determined as desired by the user or a predetermined direction from an initial position. In addition, the operation member to which an operation to be detected as information in the two-dimensional plane is input may include a trigger button. The trigger button may be a trigger-type button rotatably supported and may be configured to output a value corresponding to an amount of rotation. The controller 18 may include the trigger button instead of the analog stick unit 402. Moreover, the controller 18 may include both the analog stick unit 402 and the trigger button as the foregoing operation members.

Any combinations of the embodiment and the modifications described above are also available as embodiments of the present invention. An embodiment newly obtained by any of these combinations offers advantageous effects of the embodiment and the modifications thus combined. Moreover, it should be understood by those skilled in the art that a function to be fulfilled by each of constituent features set forth in the claims can be implemented by each of the constituent elements presented in the embodiment and the modifications or by the constituent elements in cooperation with each other.

The technical idea described above in the embodiment and the modifications can be expressed as aspects presented in the following respective items.

### [Technique 1]

An information processing device connected with an operation device that includes a plurality of buttons, the information processing device including:
a screen display section that displays an edit screen in which a special mode is able to be set for any one of the buttons of the operation device in an edit mode, the special mode being a mode for continuing an input state of the corresponding button, in which
the screen display section displays information associated with continuation of the input state of the button for which the special mode has been set, in a screen after the edit mode ends.

This information processing device can present the state of the button for which the special mode for continuing the input state has been set, to the user in an easily understandable manner.

### [Technique 2]

The information processing device according to technique 1, in which
the information associated with the continuation of the input state of the button for which the special mode has been set includes identification information of the button for which the special mode has been set.

This information processing device can present for which button the special mode for continuing the input state has been set, to the user in an easily understandable manner.

### [Technique 3]

The information processing device according to technique 1 or 2, in which
the information processing device is able to be connected with a plurality of operation devices, and
the screen display section displays, separately for each of the operation devices, the information associated with the continuation of the input state of the button for which the special mode has been set.

This information processing device can present the state of the button for which the special mode has been set, to the user in an easily understandable manner separately for each of the connected operation devices.

### [Technique 4]

The information processing device according to technique 3, in which
the information associated with the continuation of the input state of the button for which the special mode has been set includes identification information of the operation device.

This information processing device can present the operation device including the button for which the special mode has been set, to the user in an easily understandable manner.

### [Technique 5]

The information processing device according to any one of techniques 1 to 4, in which the special mode includes intermittent continuation of the input state.

This information processing device can cause any button to operate in a mode for intermittently continuing the input state.

### [Technique 6]

The information processing device according to any one of techniques 1 to 5, in which the screen display section displays the information associated with the continuation of the input state of the button for which the special mode has been set, in both a screen of a system of the information processing device and a screen of an application executed by the information processing device.

This information processing device can assist the user to perform the operation in both the system screen and the application screen.

### [Technique 7]

The information processing device according to any one of techniques 1 to 6, in which the screen display section displays information associated with continuation of each of input states of up to a predetermined number of buttons included in a plurality of the buttons for which the special mode has been set.

This information processing device can eliminate a difficulty in displaying content in the screen even in a case of an increase in the number of the buttons for which the special mode has been set.

### [Technique 8]

The information processing device according to technique 7, in which
the screen display section further displays the number of the buttons for which the special mode has been set in excess of the predetermined number.

This information processing device can eliminate a difficulty in displaying content in the screen even in a case of an increase in the number of the buttons for which the special mode has been set.

### [Technique 9]

An information processing device connected with an operation device that includes a plurality of buttons, the information processing device including:
a processor, in which
the processor displays an edit screen in which a special mode is able to be set for any one of the buttons of the operation device in an edit mode, the special mode being a mode for continuing an input state of the corresponding button, and
the processor displays information associated with continuation of the input state of the button for which the special mode has been set, in a screen after the edit mode ends.

This information processing device can present the state of the button for which the special mode for continuing the input state has been set, to the user in an easily understandable manner.

### [Technique 10]

An information processing method performed by an information processing device connected with an operation device that includes a plurality of buttons, the information processing method including:
a step of displaying an edit screen in which a special mode is able to be set for any one of the buttons of the operation device in an edit mode, the special mode being a mode for continuing an input state of the corresponding button; and
a step of displaying information associated with continuation of the input state of the button for which the special mode has been set, in a screen after the edit mode ends.

This information processing method can present the state of the button for which the special mode for continuing the input state has been set, to the user in an easily understandable manner.

### [Technique 11]

A computer program for an information processing device connected with an operation device that includes a plurality of buttons, the computer program causing the information processing device to implement:
a function of displaying an edit screen in which a special mode is able to be set for any one of the buttons of the operation device in an edit mode, the special mode being a mode for continuing an input state of the corresponding button; and
a function of displaying information associated with continuation of the input state of the button for which the special mode has been set, in a screen after the edit mode ends.

This computer program can provide an information processing device which presents the state of the button for which the special mode for continuing the input state has been set, in an easily understandable manner.

### [Industrial Applicability]

The present invention is applicable to an information processing device, an information processing system, and the like.

### [Reference Signs List]

10: Information processing system
12: Information processing device
18: Controller
112: Operation detection section
114: Operation information generation section
116: Correction section
118: Operation information transmission section
120: Profile switching section
216: Screen generation section
218: Display control section
222: Posture decision section
224: Determination section
226: Profile setting section
228: Profile registration section
230: Sound output section

## Claims

1. An information processing device connected with an operation device that includes a plurality of buttons, the information processing device comprising:
a screen display section that displays an edit screen in which a special mode is able to be set for any one of the buttons of the operation device in an edit mode, the special mode being a mode for continuing an input state of the corresponding button, wherein
the screen display section displays information associated with continuation of the input state of the button for which the special mode has been set, in a screen after the edit mode ends.

2. The information processing device according to claim 1, wherein
the information associated with the continuation of the input state of the button for which the special mode has been set includes identification information of the button for which the special mode has been set.

3. The information processing device according to claim 1, wherein
the information processing device is able to be connected with a plurality of operation devices, and
the screen display section displays, separately for each of the operation devices, the information associated with the continuation of the input state of the button for which the special mode has been set.

4. The information processing device according to claim 3, wherein
the information associated with the continuation of the input state of the button for which the special mode has been set includes identification information of the operation device.

5. The information processing device according to claim 1, wherein
the special mode includes intermittent continuation of the input state.

6. The information processing device according to claim 1, wherein
the screen display section displays the information associated with the continuation of the input state of the button for which the special mode has been set, in both a screen of a system of the information processing device and a screen of an application executed by the information processing device.

7. The information processing device according to claim 1, wherein
the screen display section displays information associated with continuation of each of input states of up to a predetermined number of buttons included in a plurality of the buttons for which the special mode has been set.

8. The information processing device according to claim 7, wherein,
in a case where the number of the buttons for which the special mode has been set and the input states of which continue exceeds the predetermined number, the screen display section further displays the exceeding number.

9. An information processing device connected with an operation device that includes a plurality of buttons, the information processing device comprising:
a processor, wherein
the processor displays an edit screen in which a special mode is able to be set for any one of the buttons of the operation device in an edit mode, the special mode being a mode for continuing an input state of the corresponding button, and
the processor displays information associated with continuation of the input state of the button for which the special mode has been set, in a screen after the edit mode ends.

10. An information processing method performed by an information processing device connected with an operation device that includes a plurality of buttons, the information processing method comprising:
a step of displaying an edit screen in which a special mode is able to be set for any one of the buttons of the operation device in an edit mode, the special mode being a mode for continuing an input state of the corresponding button; and
a step of displaying information associated with continuation of the input state of the button for which the special mode has been set, in a screen after the edit mode ends.

11. A computer program for an information processing device connected with an operation device that includes a plurality of buttons, the computer program causing the information processing device to implement:
a function of displaying an edit screen in which a special mode is able to be set for any one of the buttons of the operation device in an edit mode, the special mode being a mode for continuing an input state of the corresponding button; and
a function of displaying information associated with continuation of the input state of the button for which the special mode has been set, in a screen after the edit mode ends.
